# EUROPEAN PATENT APPLICATION

(11) **EP 4 678 690 A1**
(43) Date of publication of application: **14.01.2026**
(21) Application number: 24187254.8
(22) Date of filing: 08.07.2024
(51) Int. Cl.: C08J 11/14, C08J 11/16

(54) **ALKALINE HYDROLYSIS OF POLYETHYLENE TEREPHTHALATE USING PHASE TRANSFER CATALYSIS**

(71) Applicant: The Provost, Fellows, Foundation Scholars, & the other members of Board, of the College of the Holy & Undiv. Trinity of Queen Elizabeth near Dublin, Dublin 2 (IE)
(72) Inventor: Connon, Stephen, Dublin, D02R590 (IE); Anderson, Lee B., Dublin, D02R590 (IE); Molloy, Conall, Dublin, D02R590 (IE); Pedrini, Lorenzo, Dublin, D02R590 (IE); Martin, Ian, Dublin, D02R590 (IE)
(74) Representative: FRKelly

(57) **Abstract**

A method for hydrolysing/depolymerising polymers comprising polyethylene terephthalate units is disclosed herein, said method involving the use of phase transfer catalysts and alkaline reaction conditions.

## Description

### Field

The present invention is concerned with alkaline hydrolysis of polymers, such as polyethylene terephthalate, using phase transfer catalysis.

### BACKGROUND

It has been estimated that from 1950 to 2015, 6.3 x 10¹² kg of plastics have been synthesised - with a recycle rate of just ca. 9%. It has further been estimated, that without intervention, by 2050 12 × 10¹³ kg of these polymers will either be in landfill or out polluting the natural world,¹ therefore (until replacement of traditional plastics with sustainable materials is widespread) improvement in both the rate and efficiency of recycling is needed to reduce both the dependence on oil-derived virgin plastic and the contribution its synthesis/disposal makes to the current climatological and ecological emergency.

Polyethylene terephthalate) (PET) polyester is a major constituent in certain beverage bottles, textile fibres and food tray/pharmaceutical packaging which in 2021 accounted for 12% of worldwide solid waste.² Of the commonly bulk-manufactured plastics, PET has the highest greenhouse gas (GHG) emissions associated with its production (up to 4.5 kg GHG/kg PET)^{3,4} yet is one of the most amenable to various 'recycling' methodologies - which can be broadly be categorised as either incineration, mechanical- or chemical recycling. Incineration solves the landfill problem and can recover energy from the materials but has been determined after a recent study⁵ by the European Commission's Joint Research Centre to be less preferable from a climate change impact perspective. Mechanical recycling is operationally more facile yet amplifies existing degradation and produces recycled PET of lower value and quality,^{3,6,7} while chemical recycling *via* depolymerisation requires efficient process chemistry on large scales (frequently at high temperatures),⁷ however it can produce pure monomers which can be repolymerised to pristine PET for any application - thereby reducing reliance on fossil fuel-derived virgin PET.^{3,7} In addition, in the case of PET, a recent analysis found that CO₂ emission savings at end of life treatment are considerably lower for chemical recycling than for mechanical.³ Chemical recycling methodologies include *(inter alia)* aminolysis, alcoholysis, glycolysis and hydrolysis.⁸

Alkaline hydrolysis of PET waste generally involves using a metal hydroxide catalyst, such as sodium hydroxide or potassium hydroxide, with a concentration between 4 and 20 % w/w at elevated temperature and pressure (e.g. 225°C, and 17 atm). The product of alkaline hydrolysis using sodium hydroxide of PET is disodium terephthalate and ethylene glycol. Treatment of the disodium terephthalate with acid results in the formation of terephthalic acid (TPA).

GB822834 describes a method of processing waste PET by hydrolysing with an alkali metal hydroxide solution at about 100°C, for about 2 hours using an 10% solution of sodium hydroxide in a weight ratio to the polyester of 20:1 to obtain a maximum salting-out effect. The precipitated salt is filtered from the solution and additional sodium hydroxide added to the filtrate which may be used for further hydrolyses. Ethylene glycol, which remains in the filtrate, may be distilled out when its concentration has been increased by repeated use of the filtrate. The solvent used may be water, an alcohol or an aqueous alcohol, e.g. 50%. In a modification of the process the reaction is carried out in methanol under pressure in a single stage in the presence of 0.7% to 2% alkali metal hydroxide referred to the polyester, to give a mixture of monomethyl terephthalate and dimethyl terephthalate. The alkali metal terephthalate may be converted to the free acid or its esters by known methods. Examples are given using sodium and potassium hydroxide and water, methanol, ethanol and aqueous methanol.

WO2017087752A1 describes a process for chemically recycling PET which utilizes a microwave absorber to optimize glycolytic depolymerization of PET via microwave irradiation. The method of chemically degrading PET to its reactive intermediate, bis(2-hydroxyethyl) terephthalate (BHET), is carried out by: (a) combining PET with ethylene glycol and a catalytic system comprising a catalyst and a microwave absorber to produce a heterogeneous reaction mixture; and then (b) heating by microwave irradiating the reaction mixture to a temperature sufficient to produce a reaction product comprising BHET. The BHET monomer then an be purified and re-polymerized to form new, virgin PET.

US20050096482A1 describes a method of depolymerizing polyethylene terephthalate, and a method of manufacturing a polyester resin. When heating, melting and depolymerizing polyethylene terephthalate to be recycled, the heating, melting and depolymerization reaction of the polyethylene terephthalate to be recycled are carried out all at once using one or a plurality of extruders or using an extruder and a reactor provided at an outlet of the extruder. When manufacturing a polyester resin, the reactants are irradiated with microwaves, thus promoting the heating of the reactants, and promoting the esterification reaction.

A particularly attractive potential PET recycling methodology is alkaline hydrolysis in the presence of a phase transfer catalyst (PTC). This has the advantages of lower reaction temperatures (typically 80-100°C) than those required by neutral hydrolysis and less contamination by oligomers or decomposition of ethylene glycol using either neutral or acidic hydrolysis respectively.

While phase transfer catalysis of alkaline PET hydrolysis to form (after acidic workup) terephthalic acid is known, the PTC characteristics required to bring about efficient promotion of the process are poorly understood. Attempts to elucidate a consensus model of the contributors to catalyst activity are confounded by studies using different catalysts, loadings (1-100 mol%), PET sources, particle sizes, temperatures, stirring speeds, NaOH stoichiometry, NaOH concentrations, microwave-radiation and ultrasound.

Kosmidis et at. (Macromol. Mater. Eng. 2001, 286, 640-647) describe alkaline hydrolysis of PET using trioctylmethylammonium bromide as phase transfer catalyst with sodium hydroxide. Depolymerization reactions were carried out using 1.5 litres of sodium hydroxide (5-15 wt%) at a temperature of 70-95°C, and a concentration of PET in the range of from 7.6 g/L to 38 g/L. It was observed that reaction yield was higher at lower concentrations of PET. The PET particle size tested ranged from less than 0.71 mm to 2 mm, with smaller particle size resulting in higher yield and shorter reaction times.

Barredo et al. (J. Environ. Chem. Eng. 2023, 11, 109823) describe the alkaline hydrolysis of PET using tributylhexyadecylphosphonium bromide as phase transfer catalyst in the presence of sodium hydroxide. The effect of a wide number of operating variables (temperature, concentration of the quaternary salt, particle size and stirring rate) was studied. Optimal conditions resulted in PET conversion (99.9%) and TPA yield (93.5%) has been established after 4 h of reaction, under the following operating conditions: catalyst ratio TBHDPB:PET= 0.2:1; T = 100 °C; particle size= 1-1.4 mm and stirring rate= 525 rpm. A PET concentration of 100 g/L was employed (66.6 g PET flakes in 666.6g water).

López-Fonseca et al. (WIT Trans. Ecol. Environ., 2008, 109, 511) describe chemical recycling of PET by alkaline hydrolysis in the presence of quaternary phosphonium and ammonium salts as phase transfer catalysts. Out of nine phase transfer catalysts investigated six of the catalysts were totally inactive in the reaction with conversion values being virtually identical to those recorded in the absence of phase transfer catalyst. The catalysts of choice identified by Lopez-Fonseca et al. were tributylhexadecyl phosphonium bromide and tetraoctyl phosphonium bromide, which were reported to attain PET conversion values of 84% and 75% respectively. For 10 g of PET flakes depolymerised in 150 ml of a 6.7% aqueous sodium hydroxide solution (NaOH:PET molar ratio = 5.76) at 60, 70, 80, 90 and 100 °C, it was found that the amount of PET flakes depolymerised increased with temperature as a function of reaction time, with the higher PET conversion observed at higher temperatures. The reaction conditions tested involved a PET concentration of 67 g/L (10 g PET per 150 mL water).

Paliwal et al. (Mungray, Polym. Degrad. Stab., 2013, 98, 2094) report on ultrasound assisted alkaline hydrolysis of polyethylene terephthalate) in the presence of tetrabutyl ammonium iodide (TBAI) as phase transfer catalyst. A reduction in reaction time was observed and high yield was achieved for ultrasound assisted reactions. Paliwal et al. employed PET flakes ground to a particle size of from 0.2 to 0.5 mm. The molecular weight of the PET used was approximately 30,000 with polydispersity index 2. The reaction conditions tested involved 50 mL water, 0.09 g of TBAI catalyst and 3 g of PET ground flakes, with 5 g of NaOH, thereby providing an NaOH:PET ratio of 1.67:1 w/w, and a catalyst:PET ratio of 0.03:1 w/w. These conditions were tested with and without ultrasound, with a reaction temperature of 90°C. The disodium terephthalate produced was acidified using concentrated H₂SO₄. It was observed, that the rate of the hydrolysis reaction increased by the use of ultrasound. It was further observed that as the amount of TBAI was increased per unit weight of PET, the rate of conversion increased. 10% (w/w) NaOH concentration, TBAI:PET ratio 0.03:1, and a temperature of 90°C was reported as being the optimal conditions for ultrasound assisted alkaline hydrolysis of PET. The reaction conditions tested involved a PET concentration of 60 g/L (3 g PET per 50 mL water).

Parikh and co-workers (J. Das, A. B. Halgeri, V. Sahu and P. A. Parikh, Ind. J. Chem. Technol., 2007, 14, 173) reported that benzalkonium chloride outperformed aliphatic (albeit relatively hydrophilic) tetraalkylammonium salts in the alkaline hydrolysis of PET. Parikh and co-workers carried out PET depolymerization with a PET starting concentration of 10 g in 100 mL of water, i.e. a PET starting concentration of 100 g/L. The PET particle size was <0.6 mm.

In non-PET hydrolysis systems Herriot *et al.* (A. W. Herriott and D. Picker, J. Am. Chem. Soc., 1975, 97, 2345) found that larger symmetrical cations outperformed catalysts with one long chain in an S_{N}2 reaction in benzene/water catalysed by ammonium and phosphonium PTCs, while earlier Starks (J. Am. Chem. Soc., 1971, 93, 195) warned that ammonium PTCs were poor overall promoters of alkaline ester hydrolysis if the ester incorporated a long chain, including when using poly(methyl acrylate) as a substrate.

It would be desirable to provide efficient methods for alkaline hydrolysis of polymers including polyethylene terephthalate units, which is environmentally more efficient, and which can be effectively carried out with polyethylene terephthalate flakes which have not been ground to sub-millimetre particle size, preferably where the method is suitable for depolymerizing PET flakes of larger size e.g. circa 5 mm squares, which is consistent with output from mechanical PET recycling facilities, as well as for depolymerizing smaller sized PET particles. In addition, it would be desirable to provide a method for alkaline hydrolysis of polymers including PET units, such as PET, which has less water waste than prior art methods.

### SUMMARY

The present invention provides methods for hydrolysing/depolymerising polymers comprising polyethylene terephthalate units, such as polyethylene terephthalate.

In one aspect, the present invention provides, a method for hydrolysing polyethylene terephthalate comprising:
combining polyethylene terephthalate), water, base, and a catalyst, and heating for a time sufficient to hydrolyse at least in part the polyethylene terephthalate),
wherein the catalyst is a phase transfer catalyst having a formula selected from: 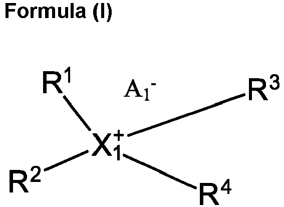
wherein X₁ is N or P, wherein A₁⁻ is an anion,
wherein each of R¹ and R² is independently selected from C₁-C₃ aliphatic,
wherein each of R³ and R⁴ is independently selected from C₅-C₁₅ aliphatic, wherein together R¹, R², R³ and R⁴ comprise at least 14 carbon atoms; The method of claim 1 or 2, wherein each of R¹ and R² are independently C₁-C₃ alkyl.

Suitably, each of R¹ and R² are C₁ alkyl, preferably methyl.

Each of R³ and R⁴ may be independently selected from C₆-C₁₂ alkyl.

R³ and R⁴ may be the same.

R³ and R⁴ may be C₆ alkyl, C₇ alkyl or C₈ alkyl, optionally, R³ and R⁴ are selected from hexyl, heptyl, or octyl.

Suitably, R¹ and R² are methyl.

R¹ and R² may be methyl and R³ and R⁴ may be heptyl or octyl.

A⁻ may be selected from Cl⁻, Br, F⁻, BF⁴⁻, MsO⁻, TfO⁻, and CF₃C(O)O⁻, preferably A⁻ is Cl⁻ or Br.

The base is suitably an alkali metal hydroxide or an alkaline earth metal hydroxide, suitably, wherein the base is selected from sodium hydroxide, potassium hydroxide, caesium hydroxide and magnesium hydroxide.

The catalyst may be employed in an amount of 5 mol% or less, suitably, in an amount of 2.5 mol% or less, more suitably, in an amount of 1.5 mol% or less relative, most suitably in an amount of 1 mol% or less per mole of monomeric repeating unit of polyethylene terephthalate.

The method may further comprise a subsequent addition of acid, suitably, a Bronsted acid, optionally, wherein the acid is selected from HCl, HBr, H₂SO₄, HNO₃, CH₃COOH, suitably, the acid is an aqueous solution.

The dry weight ratio of base to polyethylene terephthalate may be in the range of from 0.5:1 to 2:1, preferably, in a range of from 0.7:1 to 1.3:1, such as from 0.8:1 to 1.2:1, for example from 0.9:1 to 1.1:1, optionally, in a weight ratio of 1:1.

The step of combining polyethylene polyethylene terephthalate), water, base, and a catalyst, may comprise combining polyethylene terephthalate with water in a concentration of 80 to 250 g/L, preferably in a concentration of 100 to 250 g/L, optionally in a concentration of 150 to 250 g/L.

The base may be present in an amount of 10 molar equivalents or less relative to the number of moles of monomer unit of polyethylene terephthalate, suitably, in an amount of 5 molar equivalents or less relative to the number of moles of monomer unit of polyethylene terephthalate.

Suitably, the catalyst may be selected from: 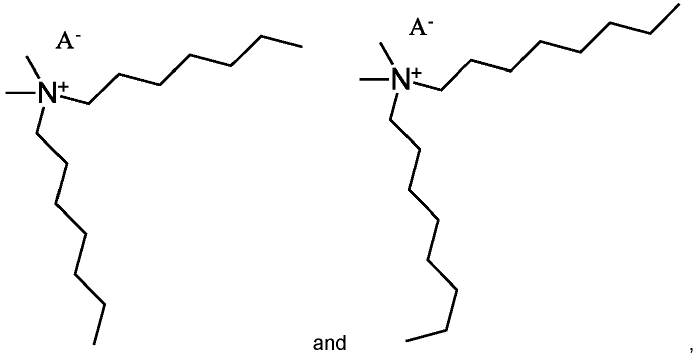 wherein A⁻ is Br or Cl⁻.

In one aspect, the present invention provides a method for hydrolysing polyethylene terephthalate comprising:
combining polyethylene terephthalate), water, base, and a catalyst, and heating for a time sufficient to hydrolyse at least in part the polyethylene terephthalate),
wherein the catalyst is a phase transfer catalyst having a formula selected from: 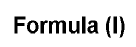 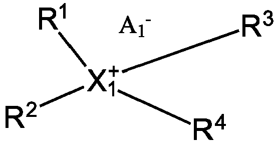
wherein X₁ is N or P, wherein A₁⁻ is an anion,
wherein each of R¹ and R² is independently selected from C₁-C₃ aliphatic,
wherein each of R³ and R⁴ is independently selected from C₅-C₁₅ aliphatic, wherein together R¹, R², R³ and R⁴ comprise at least 14 carbon atoms; or 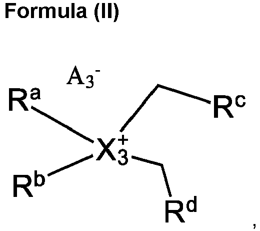
wherein X₃ is N, and A₃⁻ is an anion,
wherein R^{a} and R^{b} are each independently selected from C₂-C₈ aliphatic,
wherein R^{c} is selected from C₁-C₈ aliphatic or C₆-C₂₀ aryl, and wherein R^{d} is C₆-C₂₀ aryl, or
wherein R^{c} and R^{d} together form a ring structure having one or more C₅-C₁₀ aryl substituents, and wherein a catalyst of formula (II) comprises at least 18 carbon atoms.

Suitably, the catalyst is a phase transfer catalyst of formula (I):

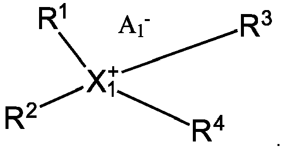

Each of R¹ and R² may independently be C₁-C₃ alkyl. For example, each of R¹ and R² may be C₁ alkyl, preferably methyl.

Each of R³ and R⁴ may independently be selected from C₆-C₁₂ alkyl.

Optionally, R³ and R⁴ are the same, (i.e. R³ = R⁴).

R³ and R⁴ may be C₆ alkyl, C₇ alkyl or C₈ alkyl. Optionally, each of R³ and R⁴ is selected from hexyl, heptyl, or octyl.

Optionally, R¹ and R² are methyl, and each of R³ and R⁴ is independently selected from heptyl or octyl, preferably, wherein R³ and R⁴ are each heptyl.

Suitably, R¹ and R² are methyl, and each of R³ and R⁴ is heptyl.

Optionally, A₁⁻ is selected from the group comprising: Cl⁻, Br, I⁻, F⁻, BF⁴⁻, MsO⁻, TfO , and CF₃C(O)O⁻.

Preferably A₁⁻ is I⁻, Cl⁻ or Br.

In one embodiment, X₁ is N, each of R¹ and R² is methyl, each of R³ and R⁴ is hexyl, and A₁⁻ is I⁻. (Compound 16)

In a preferred embodiment, X₁ is N, each of R¹ and R² is methyl, each of R³ and R⁴ is heptyl, and A₁⁻ is Br. (Compound 17)

Suitably, the catalyst has the structure: 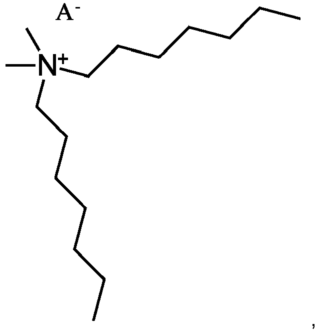 wherein A is be selected from Cl⁻, Br, I⁻, F⁻, BF⁴⁻, MsO⁻, TfO⁻, and CF₃C(O)O⁻.

In one embodiment, X₁ is N, each of R¹ and R² is methyl, each of R³ and R⁴ is hexyl, and A₁⁻ is I⁻. (Compound 16).

In a preferred embodiment, X₁ is N, each of R¹ and R² is methyl, each of R³ and R⁴ is heptyl, and A₁⁻ is Br. (Compound 17).

Suitably, the catalyst has the structure: 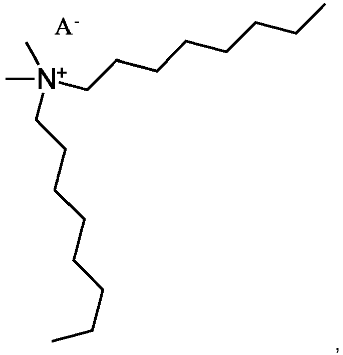 wherein A is be selected from Cl⁻, Br, I⁻, F⁻, BF⁴⁻, MsO⁻, TfO, and CF₃C(O)O⁻.

In a preferred embodiment, X₁ is N, each of R¹ and R² is methyl, each of R³ and R⁴ is octyl, and A₁⁻ is Br. (Compound 18).

In another embodiment, X₁ is N, each of R¹ and R² is methyl, each of R³ and R⁴ is nonyl, and A₁⁻ is Br. (Compound 19).

In another embodiment, X₁ is N, each of R¹ and R² is methyl, each of R³ and R⁴ is undecyl, and A₁⁻ is Br. (Compound 20).

In another embodiment, X₁ is N, each of R¹ and R² is methyl, each of R³ and R⁴ is dodecyl, and A₁⁻ is Br. (Compound 21).

In another embodiment, X₁ is N, each of R¹ and R² is methyl, each of R³ and R⁴ is heptyl, and A₁⁻ is I⁻. (Compound 52)

In another embodiment, the catalyst has the structure: (Compound 52)

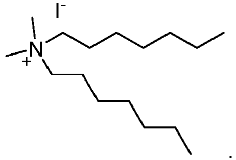

In a preferred embodiment, X₁ is N, each of R¹ and R² is methyl, each of R³ and R⁴ is octyl, and A₁⁻ is Cl⁻. (Compound 53).

In a preferred embodiment, the catalyst has the structure: (Compound 53)

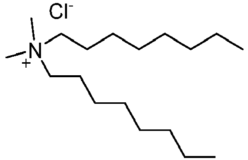

In some embodiments, the phase transfer catalyst is of the formula (II):

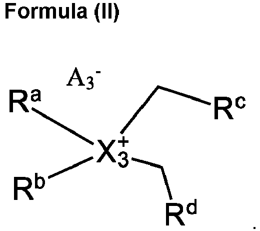

Each of R^{a} and R^{b} may independently be selected from C₂ to C₆ aliphatic, optionally, C₁ to C₆ alkyl.

Optionally, at least two of R^{a}, R^{b} and R^{c} are the same.

Suitably, at least two of R^{a}, R^{b} and R^{c} are C₄-C₆ aliphatic, optionally, C₄-C₆ alkyl, further optionally, butyl, pentyl or hexyl.

Suitably, R^{d} is C₆-C₁₂ aryl. For example, R^{d} may be selected from phenyl, biphenyl and naphthyl.

R^{a} and R^{b} may be butyl, and R^{d} may be phenyl or biphenyl.

R^{c} may be butyl.

Optionally, R^{c} is butyl and R^{d} is biphenyl.

In some embodiments, R^{c} and R^{d} are each independently C₆-C₁₂ aryl, optionally, selected from phenyl, naphthyl or biphenyl.

Suitably, R^{a} and R^{b} are each independently C₄-C₆ alkyl, optionally, selected from butyl, pentyl or hexyl.

For example, R^{a} and R^{b} may each be independently C₄-C₆ alkyl, optionally, selected from butyl, pentyl or hexyl; and R^{c} and R^{d} may each independently be C₆-C₁₂ aryl, optionally, selected from phenyl, naphthyl or biphenyl.

Suitably, R^{a} and R^{b} are each butyl or hexyl, and R^{c} and R^{d} are each phenyl (compound 42 and 43) or R^{c} and R^{d} are each naphthyl (compound 45).

A₃⁻ may be selected from Cl⁻, Br, I⁻, F⁻, BF⁴⁻, MsO_{'}, TfO⁻, and CF₃C(O)O⁻. Preferably A₃⁻ is Cl⁻ or Br.

In one embodiment, X₃ is N, each of R^{a}, R^{b} and R^{c} is ethyl, R^{d} is phenyl, and A₃⁻ is Br. (Compound 31)

In another embodiment, X₃ is N, each of R^{a}, R^{b} and R^{c} is butyl, R^{d} is phenyl, and A₃⁻ is Br. (Compound 32)

In another embodiment, X₃ is N, each of R^{a}, R^{b} and R^{c} is butyl, R^{d} is naphthyl, and A₃⁻ is Br. (Compound 34/36)

In a preferred embodiment, X₃ is N, each of R^{a}, R^{b} and R^{c} is butyl, R^{d} is biphenyl, and A₃⁻ is Br. (Compound 37)

In a preferred embodiment, the catalyst has the structure: (Compound 37)

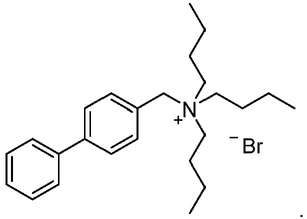

In another embodiment, X₃ is N, R^{a} and R^{b} are methyl, R^{c} and R^{d} are phenyl, and A₃⁻ is Br. (Compound 40).

In another embodiment, X₃ is N, R^{a} and R^{b} are propyl, R^{c} and R^{d} are phenyl, and A₃⁻ is Br. (Compound 41).

In a preferred embodiment, X₃ is N, R^{a} and R^{b} are butyl, R^{c} and R^{d} are phenyl, and A₃⁻ is Br. (Compound 42).

In a preferred embodiment, the catalyst has the structure: 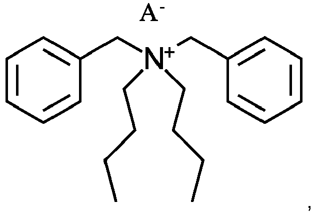 wherein A⁻ is be selected from Cl⁻, Br⁻, I⁻, F⁻, BF⁴⁻, MsO⁻, TfO⁻, and CF₃C(O)O⁻. Suitably, A⁻ is Br (compound 42).

In a preferred embodiment, X₃ is N, R^{a} and R^{b} are hexyl, R^{c} and R^{d} are phenyl, and A₃⁻ is Br. (Compound 43)

In a preferred embodiment, the catalyst has the structure: (Compound 43) 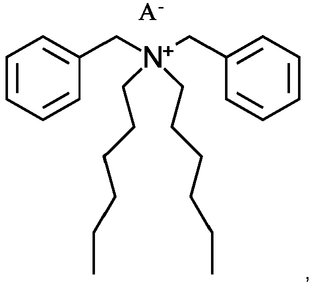 wherein A⁻ is be selected from Cl⁻, Br⁻, I⁻, F⁻, BF⁴⁻, MsO⁻, TfO⁻, and CF₃C(O)O⁻.

In another embodiment, X₃ is N, R^{a} and R^{b} are methyl, R^{c} and R^{d} are naphthyl, and A₃⁻ is Br. (Compound 44).

In another embodiment, X₃ is N, R^{a} and R^{b} are methyl, R^{c} and R^{d} are biphenyl, and A₃⁻ is Br. (Compound 45).

In another embodiment, X₃ is N, R^{a} and R^{b} are butyl, R^{c} and R^{d} are naphthyl, and A₃⁻ is Br. (Compound 46).

The base may be an alkali metal hydroxide or an alkaline earth metal hydroxide, suitably, wherein the base is selected from sodium hydroxide, potassium hydroxide, caesium hydroxide and magnesium hydroxide. Preferably the base is sodium hydroxide.

The catalyst may be employed in an amount of 10 mol% or less, preferably in an amount of 5 mol% or less, suitably, in an amount of 2.5 mol% or less, more suitably, in an amount of 1.5 mol% or less relative, most suitably in an amount of 1 mol% or less per mole of monomeric repeating unit of polyethylene terephthalate.

The method may further comprise a subsequent addition of acid, suitably, a Bronsted acid. For example, the acid may be selected from HCl, HBr, H₂SO₄, HNO₃, and CH₃COOH, suitably, the acid is an aqueous solution.

The base may be employed in a dry weight ratio of 2:1 or less per gram of polyethylene terephthalate, suitably, the base is employed in a dry weight ratio of 1.5:1 or less per gram of polyethyelene terephthalate, more suitably, the base is employed in a weight ratio of 1:1 or less per gram of polyethylene terephthalate.

The weight ratio of base to polyethylene terephthalate may be in the range of from 0.5:1 to 2:1, preferably, in a range of from 0.7:1 to 1.3:1, such as from 0.8:1 to 1.2:1, for example from 0.9:1 to 1.1:1, optionally, in a weight ratio of 1:1

Suitably, the step of combining polyethylene polyethylene terephthalate), water, base, and a catalyst, comprises combining polyethylene terephthalate with water in a concentration of 80 to 250 g/L, preferably in a concentration of 100 to 250 g/L, optionally in a concentration of 150 to 250 g/L. Advantageously, the method of the invention is carried out at high concentration, thereby reducing water waste, and energy input costs, and overall reducing the environmental impact of the reaction.

The base may be present in an amount of 10 molar equivalents or less relative to the number of moles of monomer unit of polyethylene terephthalate, suitably, in an amount of 5 molar equivalents or less relative to the number of moles of monomer unit of polyethylene terephthalate.

In one aspect the present invention provides a method for alkaline hydrolysis of polyethylene terephthalate) comprising:
combining polyethylene terephthalate), water, base, and a catalyst, and heating for a time sufficient to hydrolyze at least in part the polyethylene terephthalate),
wherein the catalyst is a phase transfer catalyst having the formula Ic: 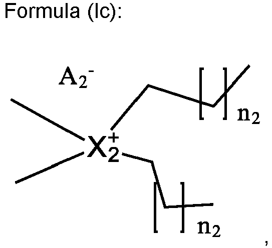 wherein X₂ is N or P, and each n₂ is an integer independently selected from 4 to 10, and wherein A₂⁻ is an anion.

Suitably, X₂ is N.

Each n₂ may independently be 4, 5 or 6.

Suitably, the catalyst is selected from: 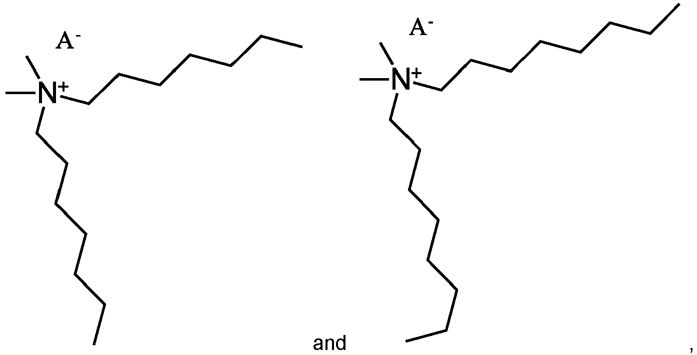 wherein A⁻ is Br or I⁻ or Cl⁻.

Suitably, the catalyst is selected from: 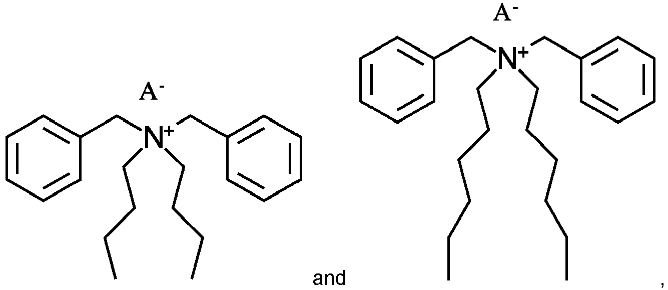 wherein A⁻ is Br or I⁻ or Cl⁻.

In another aspect, the present invention provides a compound having the formula: 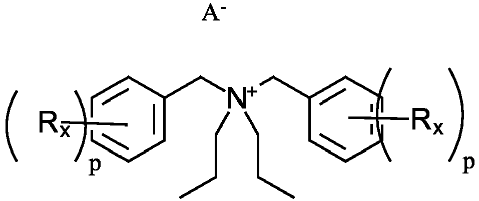
wherein each p is an integer independently selected from 0 to 5,
wherein each Rₓ is independently selected from C₁-C₁₂ aliphatic, optionally substituted with one or more selected from the group consisting of C₁-C₆ alkyoxy, C₁-C₆ thioalkyl, Br, Cl, I, and F.

Suitably, the catalyst has the formula:

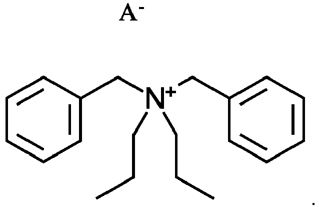

Suitably, A⁻ is Br, Cl⁻ or I⁻.

### DETAILED DESCRIPTION

### Phase Transfer Catalysts

Herein disclosed are phase transfer catalysts classified as follows:

**Symmetrical Catalyst:** ammonium or phosphonium salts, wherein each substituent is the same, and each substituent is an aliphatic chain, such as an alkyl chain e.g. tetrabutyl ammonium bromide, tetraoctylphosphonium bromide etc.

**3-Chain Catalyst:** ammonium or phosphonium salts bearing a single C₁-C₄ substituent, such as a single methyl substituent, and three aliphatic chain substituents (e.g. alkyl chain substituents) each comprising more than 4 carbon atoms, e.g. trioctylmethylammonium bromide, trioctylmethylphosphonium bromide etc.

**2-Chain Catalyst:** ammonium or phosphonium salts bearing two C₁-C₄ substituents, such as two methyl substituents, and two aliphatic chain substituents (e.g. alkyl chain substituents) each comprising more than 4 carbon atoms, e.g. dioctyldimethylammonium bromide, dioctyldimethylphosphonium bromide etc.

**1-Chain Catalyst:** ammonium or phosphonium salts bearing three C₁-C₄ substituents, such as three methyl substituents, and one aliphatic chain substituent (e.g. alkyl chain substituent) comprising more than 4 carbon atoms e.g. trimethyloctylammonium bromide, trimethylhexadecylammonium bromide, tributyldodecylphosphonium bromide etc.

**Benzylated Catalyst:** ammonium or phosphonium salts bearing one or two -CH₂-Aryl groups

**Aromatic Catalyst:** ammonium or phosphonium salts bearing one or more aromatic substituents e.g. methyl pyridinium iodide, or trimethylphenylammonium bromide

**lonophore Catalyst:** compounds that form complexes with ions and facilitate transport of ions e.g. crown ethers.

The symmetrical, 3-chain, 2-chain and 1-chain catalysts may have the formula (J): 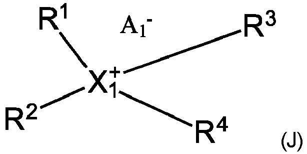
wherein X₁ is N or P, wherein A₁⁻ is an anion,
wherein each of R¹, R², R³ and R⁴ is independently selected from C₁-C₂₀ aliphatic, wherein together R¹, R², R³ and R⁴ comprise at least 14 carbon atoms, and wherein at least two of R¹, R², R³ and R⁴ are independently selected from C₂-C₂₀ aliphatic.

A₁⁻ may be selected from Cl⁻, Br, I⁻, F⁻, BF⁴⁻, MsO⁻, TfO, and CF₃C(O)O⁻. Suitably, A₁⁻ is Br or Cl⁻.

X₁ is N or P. Suitably, X₁ is N.

Preferably, X₁ is N and A₁⁻ is Br or Cl⁻.

Each of R¹, R², R³ and R⁴ may be independently selected from C₁-C₂₀ alkyl, and at least two of R¹, R², R³ and R⁴ are independently selected from C₂-C₂₀ alkyl.

For example, each of R¹, R², R³ and R⁴ may independently be selected from C₄-C₈ alkyl.

In some catalysts (i.e. symmetrical catalysts), R¹, R², R³ and R⁴ may be the same, i.e. R¹=R²=R³=R⁴.

In some catalysts, R¹, R², R³ and R⁴ are C₄, C₅ or C₆ alkyl, optionally, wherein R¹, R², R³ and R⁴ are selected from butyl, pentyl or hexyl.

In a preferred symmetrical catalyst, each of R¹, R², R³ and R⁴ is pentyl. For example, each of R¹, R², R³ and R⁴ may be C₅ alkyl, optionally, pentyl, and X₁ is N.

Suitably, each of R¹, R², R³ and R⁴ may be C₅ alkyl, optionally, pentyl; X₁ is N; and A₁⁻ is Br or Cl⁻.

A preferred symmetrical catalyst is tetrapentylammonium bromide.

Also disclosed herein are 3-chain catalysts.

Suitably, in a 3-chain catalyst, R¹ is C₁-C₄ alkyl, preferably methyl.

R¹ may be C₁ alkyl, optionally, methyl and each of R², R³ and R⁴ may be independently selected from C₅ to C₁₁ aliphatic, optionally, C₅ to C₁₁ alkyl.

Suitably, R¹ is C₁ alkyl, optionally, methyl and R², R³ and R⁴ are the same.

R¹ may be C₁ alkyl, optionally, methyl and each of R², R³ and R⁴ may be independently C₅-C₉ aliphatic, optionally, C₅-C₉ alkyl.

Suitably, R¹ is C₁ alkyl, optionally, methyl and each of R², R³ and R⁴ is C₅-C₉ aliphatic, optionally, C₅-C₉ alkyl. For example, R¹ may be C₁ alkyl, optionally, methyl and each of R², R³ and R⁴ may be pentyl, hexyl, heptyl, octyl or nonyl.

In a preferred 3-chain catalyst, R¹ is methyl, and each of R², R³ and R⁴ is hexyl.

Suitably, R¹ is methyl, and each of R², R³ and R⁴ is hexyl, and X₁ is N. More suitably, R¹ is methyl, and each of R², R³ and R⁴ is hexyl, X₁ is N, and A⁻ is Br or Cl⁻.

A preferred 3-chain catalyst is methyltrihexylammonium bromide.

Also disclosed herein are 2-chain catalysts. 2-chain catalysts are the preferred catalyst for PET depolymerization disclosed herein.

Suitably, in a 2-chain catalyst, R¹ and R² are C₁-C₄ alkyl, optionally, methyl, and R³ and R⁴ are each independently C₆-C₁₈ aliphatic, optionally, C₆-C₁₈ alkyl.

For example, R¹ and R² may be C₁ alkyl, optionally, methyl, and R³ and R⁴ may each independently C₆-C₁₈ aliphatic, optionally, C₆-C₁₈ alkyl. Suitably, R³ and R⁴ are each independently C₆-C₁₀ aliphatic, optionally, C₆-C₁₀ alkyl. Optionally, R³ and R⁴ are the same.

Suitably, R¹ and R² are methyl, and R³ and R⁴ are C₆-C₈ alkyl, optionally, C₇ alkyl. For example, R³ and R⁴ may be selected from hexyl, heptyl and octyl, optionally, R³ and R⁴ are heptyl.

Suitably, X₁ is P, and each of R¹, R², R³ and R⁴ is butyl, and A₁⁻ is Br. (Compound 3).

Suitably, X₁ is N, and each of R¹, R², R³ and R⁴ is butyl, and A₁₋ is Cl⁻. (Compound 4).

Suitably, X₁ is N, and each of R¹, R², R³ and R⁴ is butyl, and A₁⁻ is Br. (Compound 5).

Suitably, X₁ is N, and each of R¹, R², R³ and R⁴ is butyl, and A₁⁻ is I⁻. (Compound 6).

Suitably, X₁ is N, and each of R¹, R², R³ and R⁴ is pentyl, and A₁⁻ is Br. (Compound 7)

Suitably, X₁ is N, and each of R¹, R², R³ and R⁴ is hexyl, and A₁⁻ is Br. (Compound 8).

Suitably, X₁ is P, and each of R¹, R², R³ and R⁴ is octyl, and A₁⁻ is Br. (Compound 9).

Suitably, X₁ is N, and each of R¹, R², R³ and R⁴ is octyl, and A₁⁻ is Br. (Compound 10).

Suitably, X₁ is N, R¹ is methyl, and each of R², R³ and R⁴ is pentyl, and A₁⁻ is Br. (Compound 11).

Suitably, X₁ is N, R¹ is methyl, and each of R², R³ and R⁴ is hexyl, and A₁⁻ is Br. (Compound 12).

Suitably, X₁ is N, R¹ is methyl, and each of R², R³ and R⁴ is octyl, and A₁⁻ is Br. (Compound 13).

Suitably, X₁ is N, R¹ is methyl, and each of R², R³ and R⁴ is octyl, and A₁⁻ is I⁻. (Compound 14).

Suitably, X₁ is N, R¹ is methyl, and each of R², R³ and R⁴ is octyl, nonyl or decyl, and A₁⁻ is Cl⁻. (Compound 15).

Suitably, X₁ is N, each of R¹ and R² is methyl, each of R³ and R⁴ is hexyl, and A₁⁻ is I⁻. (Compound 16).

Preferably, the catalyst has the structure: 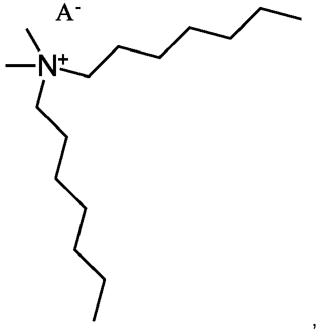 wherein A⁻ is be selected from Cl⁻, Br, I⁻, F⁻, BF⁴⁻, MsO⁻, TfO , and CF₃C(O)O⁻.

Preferably, X₁ is N, each of R¹ and R² is methyl, each of R³ and R⁴ is heptyl, and A₁⁻ is Br. (Compound 17).

Preferably, X₁ is N, each of R¹ and R² is methyl, each of R³ and R⁴ is octyl, and A₁⁻ is Br.

In a preferred embodiment, the catalyst has the structure: 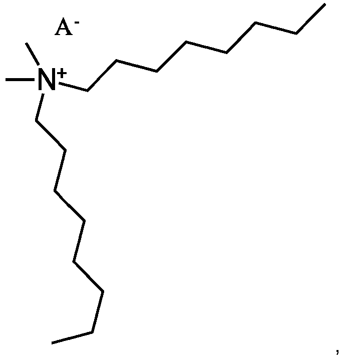 wherein A⁻ is be selected from Cl⁻, Br⁻, I⁻, F⁻, BF⁴⁻, MsO⁻, TfO⁻, and CF₃C(O)O⁻.

For example, the catalyst has the structure: 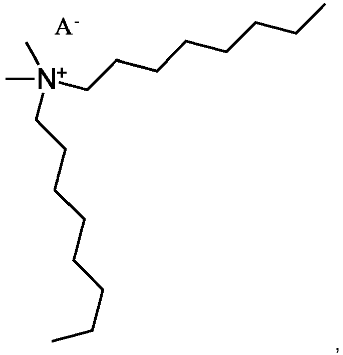 wherein A⁻ is Br (Compound 18).

Suitably, X₁ is N, each of R¹ and R² is methyl, each of R³ and R⁴ is nonyl, and A₁⁻ is Br. (Compound 19).

Suitably, X₁ is N, each of R¹ and R² is methyl, each of R³ and R⁴ is undecyl, and A₁⁻ is Br. (Compound 20).

Suitably, X₁ is N, each of R¹ and R² is methyl, each of R³ and R⁴ is decyl, and A₁⁻ is Br.

Suitably, X₁ is N, each of R¹ and R² is methyl, each of R³ and R⁴ is dodecyl, and A₁⁻ is Br. (Compound 21).

Suitably, X₁ is N, each of R¹ and R² is methyl, each of R³ and R⁴ is heptyl, and A₁⁻ is I⁻. (Compound 52)

Suitably, the catalyst has the structure: (Compound 52)

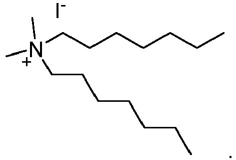

Preferably, X₁ is N, each of R¹ and R² is methyl, each of R³ and R⁴ is octyl, and A₁⁻ is Cl⁻. (Compound 53)

Preferably, the catalyst has the structure: (Compound 53)

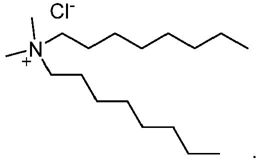

Also disclosed herein are phase transfer catalysts of the formula (II): 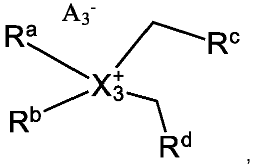
wherein X₃ is N, and A₃⁻ is an anion,
wherein R^{a} and R^{b} are each independently selected from C₁-C₈ aliphatic,
wherein R^{c} is selected from C₁-C₈ aliphatic or C₆-C₂₀ aryl, and wherein R^{d} is C₆-C₂₀ aryl, or
wherein R^{c} and R^{d} together form a ring structure having one or more C₅-C₁₀ aryl substituents, and wherein a catalyst of formula (II) comprises at least 18 carbon atoms.

A₃⁻ may be selected from Cl⁻, Br, F⁻, BF⁴⁻, MsO_{'}, TfO , and CF₃C(O)O⁻. Suitably, A₃⁻ is Br or Cl⁻.

X₃ is N or P. Suitably, X₃ is N.

Preferably, X₃ is N and A⁻ is Br or Cl⁻.

R^{a} and R^{b} may be independently selected from C₁ to C₆ aliphatic, optionally, C₁ to C₆ alkyl.

Optionally, R^{a}, R^{b} and R^{c} are the same.

R^{a} and R^{b} may be independently selected from methyl, ethyl, propyl, butyl, pentyl, and hexyl.

R^{d} may be selected from phenyl, biphenyl and naphthyl.

A preferred catalyst disclosed herein according to Formula (II) are benzylated catalysts. Benzylated catalysts are ammonium or phosphonium catalysts comprising one or two -CH₂-Aryl groups.

Suitably, each of R^{a}, R^{b}, and R^{c} is C4 alkyl, optionally butyl, and R^{d} is biphenyl.

Suitably, R^{a} and R^{b} are C₁-C₆ alkyl, optionally, selected from methyl, ethyl, propyl, butyl, pentyl, and hexyl, and Rc and Rd are phenyl, biphenyl or naphthyl.

In a preferred benzylated catalyst, R^{a} and R^{b} are each selected from propyl, butyl, pentyl or hexyl, and R^{c} and R^{d} are each selected from phenyl, naphthyl or biphenyl.

Suitably, X₃ is N. Suitably, A₃- is Br or Cl⁻.

Suitably, X₃ is N, each of R^{a}, R^{b} and R^{c} is ethyl, R^{d} is phenyl, and A₃⁻ is Br.

### (Compound 31)

Suitably, X₃ is N, each of R^{a}, R^{b} and R^{c} is butyl, R^{d} is phenyl, and A₃⁻ is Br.

### (Compound 32)

Suitably, X₃ is P, each of R^{a}, R^{b} and R^{c} is butyl, R^{d} is phenyl, and A₃⁻ is Br.

### (Compound 33)

Suitably, X₃ is N, each of R^{a}, R^{b} and R^{c} is butyl, R^{d} is naphthyl, and A₃⁻ is Br.

### (Compound 34/36)

Suitably, X₃ is P, each of R^{a}, R^{b} and R^{c} is butyl, R^{d} is naphthyl, and A₃⁻ is Br.

### (Compound 35)

Preferably, X₃ is N, each of R^{a}, R^{b} and R^{c} is butyl, R^{d} is biphenyl, and A₃⁻ is Br.

### (Compound 37)

Preferably, the catalyst has the structure: (Compound 37)

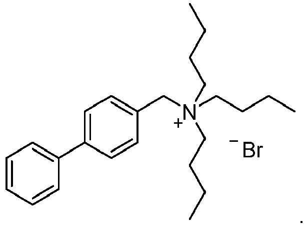

Suitably, X₃ is N, R^{a} and R^{b} are methyl, R^{c} and R^{d} are phenyl, and A₃⁻ is Br.

### (Compound 40)

Suitably, X₃ is N, R^{a} and R^{b} are propyl, R^{c} and R^{d} are phenyl, and A₃⁻ is Br.

### (Compound 41)

Preferably, X₃ is N, R^{a} and R^{b} are butyl, R^{c} and R^{d} are phenyl, and A₃⁻ is Br.

### (Compound 42)

Preferably, the catalyst has the structure: (Compound 42) 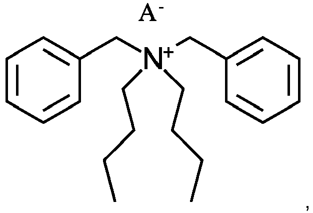 wherein A⁻ is be selected from Cl⁻, Br, I⁻, F⁻, BF⁴⁻, MsO_{'}, TfO⁻, and CF₃C(O)O⁻.

Preferably, X₃ is N, R^{a} and R^{b} are hexyl, R^{c} and R^{d} are phenyl, and A₃⁻ is Br.

### (Compound 43)

Preferably, the catalyst has the structure: (Compound 43) 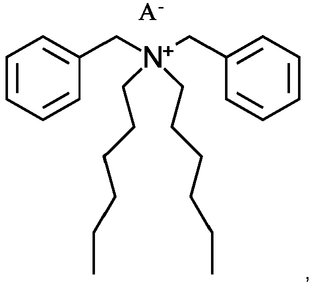 wherein A⁻ is be selected from Cl⁻, Br, I⁻, F⁻, BF⁴⁻, MsO⁻, TfO⁻, and CF₃C(O)O⁻. ,

Suitably, X₃ is N, R^{a} and R^{b} are methyl, R^{c} and R^{d} are naphthyl, and A₃⁻ is Br.

### (Compound 44)

Suitably, X₃ is N, R^{a} and R^{b} are methyl, R^{c} and R^{d} are biphenyl, and A₃⁻ is Br.

### (Compound 45)

Suitably, X₃ is N, R^{a} and R^{b} are butyl, R^{c} and R^{d} are naphthyl, and A₃⁻ is Br.

### (Compound 46)

Preferred benzylated catalysts include Biphenyltributylammonium bromide (compound 37), dibenzyldibutylammonium bromide (compound 42), and dibenzyldihexylammonium bromide (compound 43).

The catalysts disclosed herein have utility in depolymerizing polymers comprising PET units, such as PET.

For example, the phase transfer catalysts disclosed herein may be used in a method for hydrolysing a polymer comprising polyethylene terephthalate units, such as polyethylene terephthalate, such method comprising the steps of:
(i) combining the polymer comprising polyethyelene terephthalate units, (such as polyethylene terephthalate), water, base and the phase transfer catalyst, and heating for a time sufficient to hydrolyse at least in part the polymer comprising polyethylene terephthalate units, thereby producing terephthalate salt; and
(ii) adding acid to protonate the terephthalate salt, thereby forming terephthalic acid.

The base is suitably, an alkali metal hydroxide or an alkaline earth metal hydroxide, more suitably, the base is selected from sodium hydroxide, potassium hydroxide, and magnesium hydroxide.

The catalyst is employed in an amount of 10 mol% or less, preferably in an amount of 5 mol% or less, suitably, in an amount of 2.5 mol% or less, more suitably, in an amount of 1.5 mol% or less relative, most suitably in an amount of 1 mol% or less per mole of monomeric repeating unit of polyethylene terephthalate.

The acid is suitably selected from HCl, HBr, H₂SO₄, HNO₃, CH₃COOH, suitably, the acid is an aqueous solution.

The base may be employed in a weight ratio of 2:1 or less per gram of polyethylene terephthalate, suitably, wherein the base is employed in a weight ratio of 1.5:1 or less per gram of polyethyelene terephthalate, more preferably wherein the base is employed in a weight ratio of 1:1 or less per gram of polyethylene terephthalate.

The weight ratio of base to polyethylene terephthalate is suitably in the range of from 0.5:1 to 2:1, preferably, in a range of from 0.7:1 to 1.3:1, such as from 0.8:1 to 1.2:1, for example from 0.9:1 to 1.1:1, optionally, in a weight ratio of 1:1.

The base may be present in an amount of 10 molar equivalents or less relative to the number of moles of monomer unit of polyethylene terephthalate, suitably, in an amount of 5 molar equivalents or less relative to the number of moles of monomer unit of polyethylene terephthalate.

Also disclosed herein is a method for the alkaline hydrolysis of polyethylene terephthalate) comprising:
combining polyethylene terephthalate), water, base, and a catalyst, and heating for a time sufficient to hydrolyze at least in part the polyethylene terephthalate),
wherein the catalyst is a phase transfer catalyst selected from the following group: 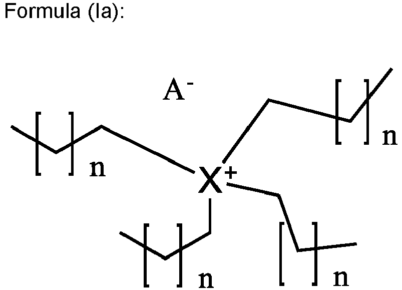
wherein X is N or P, and each n is an integer independently selected from 2 to 5, and wherein A⁻ is an anion; 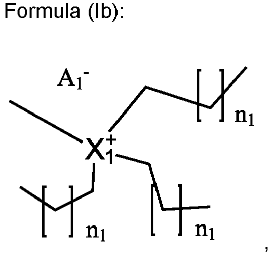 wherein X₁ is N or P, and each n₁ is an integer independently selected from 2 to 7, and wherein A₁⁻ is an anion; and 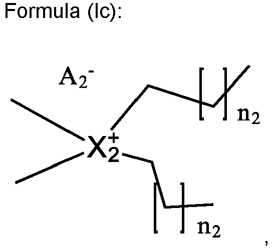 wherein X₂ is N or P, and each n₂ is an integer independently selected from 4 to 15, and wherein A₂⁻ is an anion; and optionally, further comprising the addition of an acid, thereby forming terephthalic acid.

The invention will be more readily appreciated by a review of the examples which follow.

### EXAMPLES

The following examples were conducted to ascertain the contribution made by structural features of quaternary phosphonium and ammonium based PTCs in catalysing the alkaline hydrolysis of polymers comprising PET units, such as in the alkaline hydrolysis of PET.

To date, much of the investigations on PET depolymerization has employed smaller PET flakes, which have a larger surface area per gram of PET, and therefore represent more reactive, and less challenging substrates. In order to develop a platform for industrial application, we employed PET flakes of larger size, circa 5 mm square flakes, which is consistent with the output from mechanical PET recycling.

### Materials and Methods

The PET was derived from colourless water bottles purchased from a large supermarket chain. The average molecular weight for bottle grade PET ranges from 24000 to 36000 g mol⁻¹. The density of the PET was in the range of from 1.38 to 1.41 g/cm³.

Once emptied of their contents and labels were removed, the PET bottles were cut into flakes of approx. 5 mm square in size.

Sodium hydroxide pellets were purchased from Sigma Aldrich, and used without further purification.

Hydrochloric acid was purchased from Sigma Aldrich (conc.) and dilute solutions were prepared therefrom using standard procedures.

Phase transfer catalysts were purchased where available or synthesized in accordance with literature procedures, unless otherwise specified.

### Basic PET hydrolysis procedure

An oven dried carousel flask was charged with water (5 mL), sodium hydroxide (0.500 g) and catalyst (5 mol %).^{a} The flask was placed under an atmosphere of nitrogen (balloon), and the reaction was stirred for 20 min at 90 °C. Polyethylene terephthalate flakes (ca. 5 mm squares, 0.500 g) were added and the mixture was stirred (500 RPM) for 3 h. The flask was removed from the carousel and cooled in an ice-bath for 10 min. The reaction mixture was then filtered, and the residue was washed with water (5 mL x 2). The filtrate was adjusted, with cooling, to pH 2-3 using dilute HCl and the resulting precipitate was filtered. The solids were washed with water (5 mL) and the product was dried for 4 h in a vacuum oven at 60 °C. The yield of terephthalic acid was determined by ¹H NMR spectroscopy using 4-iodoanisole as an internal standard: known masses of product (> 15 mg) and 4-iodoanisole (> 15 mg) were weighed into a sample vial and dissolved in DMSO-*d₆*. The integrals corresponding to both TPA and isophthalic acid (a common additive utilised in PET production) were used to determine yield.
^{a} Mol% of catalyst is related to the number of moles of monomeric units (2.6 mmol) present in 0.500 g of polymer.

Proton Nuclear Magnetic Resonance (NMR) spectra were recorded on Bruker DPX 400 MHz and Bruker Avance II 600MHz spectrometers, using CDCl₃ and DMSO-*d*₆ as solvents, and referenced relative to residual CHCl₃ (δ = 7.26 ppm) or DMSO (δ = 2.50 ppm). Carbon NMR spectra were recorded on the same instruments (101 MHz and 151 MHz respectively) with total proton decoupling. Phosphorus NMR spectra were recorded on the Bruker DPX400 machine (162 MHz). Infrared spectra were obtained on a Perkin Elmer Spectrum 100 FT-IR spectrometer equipped with a universal ATR sampling accessory. ESI mass spectra were acquired using a Waters Micromass LCT- time of flight mass spectrometer (TOF), interfaced to a Waters 2690 HPLC. The instrument was operated in either positive or negative mode as required. APCI experiments were carried out on a Bruker microTOF-Q III spectrometer interfaced to a Dionex UltiMate 3000 LC or direct insertion probe. Agilent tuning mix APCI-TOF was used to calibrate the system. Hydrolysis experiments were carried out with Radleys Carousel 12 Plus Reaction Station. HPLC grade water was purchased from Sigma-Aldrich and used as the reaction medium for the basic hydrolysis of PET. Colourless polyethylene terephthalate bottles were purchased from a local large supermarket chain and cut into flakes (ca. 5 mm square). Unless otherwise noted, all commercially available compounds were used as provided, without any further purification.

### Test System

The test system employed to assess the efficacy of various catalysts was as follows:
- 500 mg PET flakes (approx. 5 mm square),
- Base: NaOH weight ratio of 0.5:2 to 2:1 relative to PET, preferably, a weight ratio of 1:1.
- Catalyst: 1 mol% to 10 mol% relative to the number of moles of monomeric units present in PET polymer, e.g. the number of monomeric units present in 0.5 g of PET is 2.6 mmol, which enables the calculation of the required amount of catalyst based on the mass of PET used.
- Water: 5 mL or 2.5 mL
- Stirring: 500 rpm
- Temperature: 90°C

Scheme 1 below illustrates the test system, along with different catalyst classes investigated. 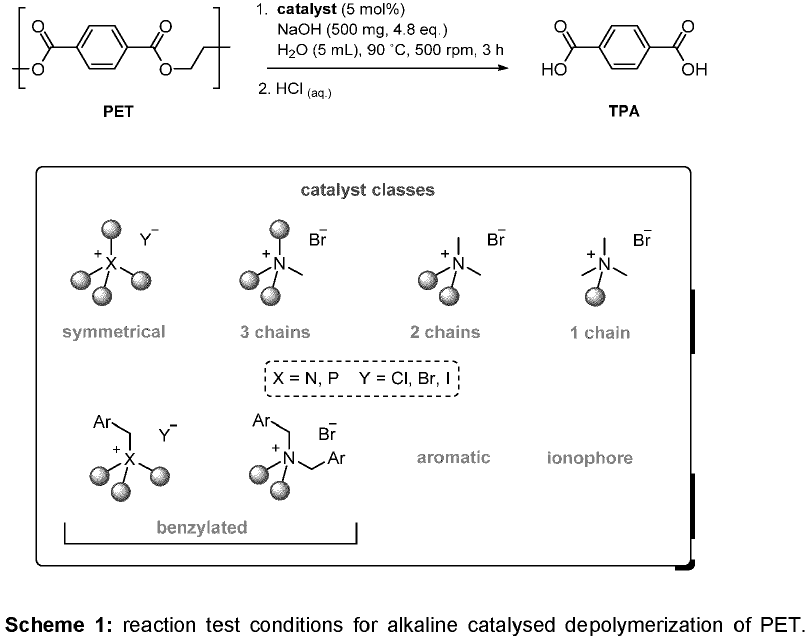 Catalysts were classified as follows:
Symmetrical Catalyst: ammonium or phosphonium salts, wherein each substituent is the same, and each substituent is an aliphatic chain, such as an alkyl chain e.g. tetrabutyl ammonium bromide, tetraoctylphosphonium bromide etc.
3 Chain Catalyst: ammonium or phosphonium salts bearing a single C₁-C₄ substituent, such as a single methyl substituent, and three aliphatic chain substituents (e.g. alkyl chain substituents) each comprising more than 4 carbon atoms, e.g. trioctylmethylammonium bromide, trioctylmethylphosphonium bromide etc.
2 Chain Catalyst: ammonium or phosphonium salts bearing two C₁-C₄ substituents, such as two methyl substituents, and two aliphatic chain substituents (e.g. alkyl chain substituents) each comprising more than 4 carbon atoms, e.g. dioctyldimethylammonium bromide, dioctyldimethylphosphonium bromide etc.
1 Chain Catalyst: ammonium or phosphonium salts bearing three C₁-C₄ substituents, such as three methyl substituents, and one aliphatic chain substituent (e.g. alkyl chain substituent) comprising more than 4 carbon atoms e.g. trimethyloctylammonium bromide, trimethylhexadecylammonium bromide, tributyldodecylphosphonium bromide etc.
Benzylated Catalyst: ammonium or phosphonium salts bearing one or two -CH₂-Aryl groups.
Aromatic Catalyst: ammonium or phosphonium salts bearing one or more aromatic substituents e.g. methyl pyridinium iodide, or trimethylphenylammonium bromide.
lonophore Catalyst: compounds that form complexes with ions and facilitate transport of ions e.g. crown ethers.

In Table 1 below, the alkaline hydrolysis of PET catalysed by symmetrical PTCs was investigated:

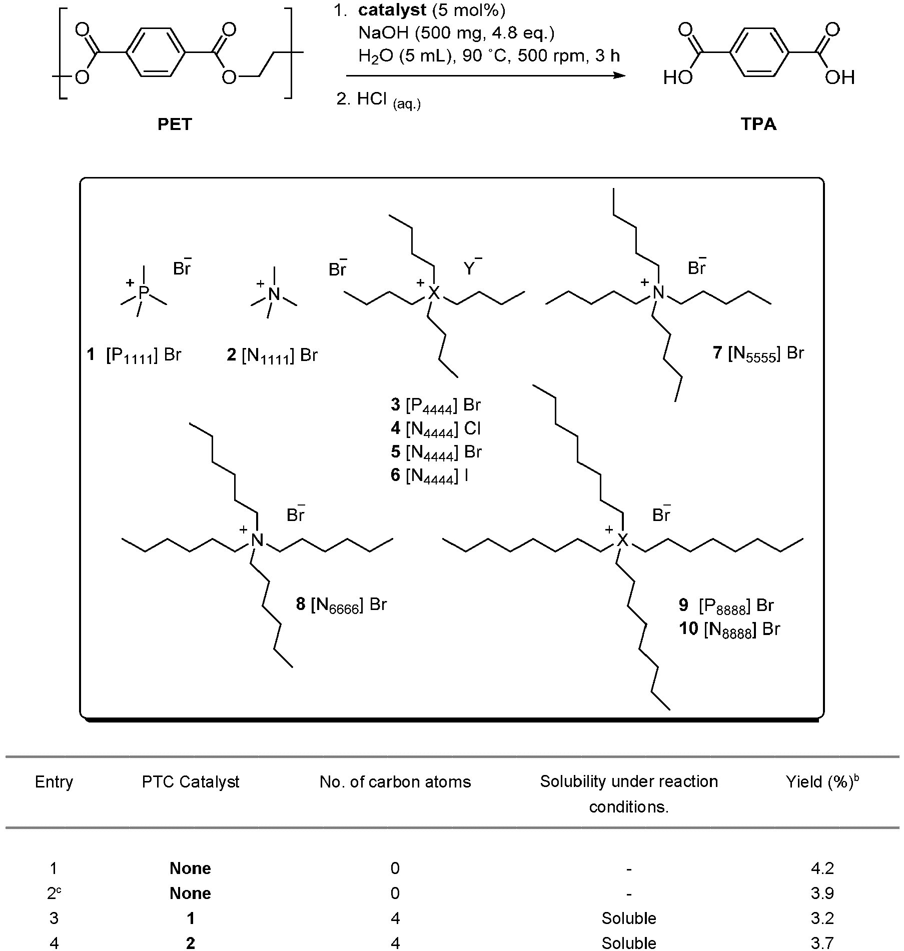

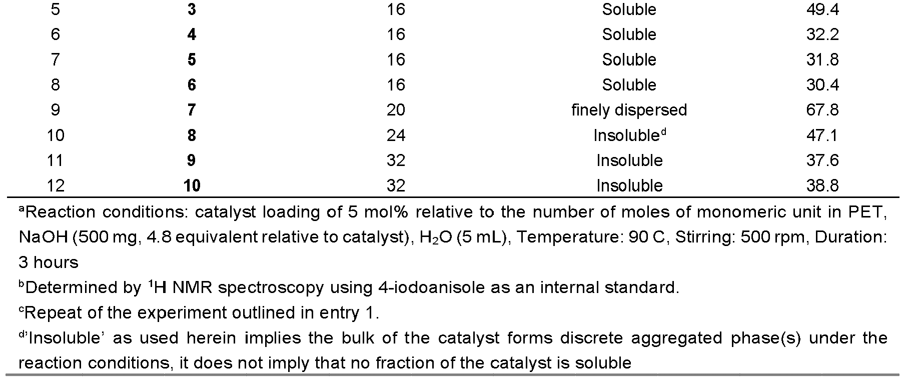

In the absence of any PTC, very low product yields of 4% were reproducibly obtained (entries 1-2). Tetramethylphosphonium- and ammonium salts **1-2** (entries 3-4) appear to moderately inhibit hydrolysis, however the commonplace water-soluble tetrabutylphosphonium-²¹ and ammonium salts **3-6** exhibited appreciable activity (entries 5-8). The more lipophilic phosphonium salt **3** considerably outperformed its ammonium variants **4-6,** while variation of the anionic component had - as expected - little influence on the outcome once the catalyst is soluble in the reaction medium. The tetrapentyl homologue **7** exhibited interesting behaviour: it is partially soluble in the reaction medium; and the portion not dissolved is very finely dispersed. This catalyst promoted the reaction with considerably superior efficacy to the tetrabutyl analogue **5** (entry 9). Further chain extension led to increasing levels of insolubility and diminished yields (*i*.*e*. **9-10,** entries 10-12).

In Table 2 the alkaline hydrolysis of PET catalysed by 3-chain PTCs was investigated.

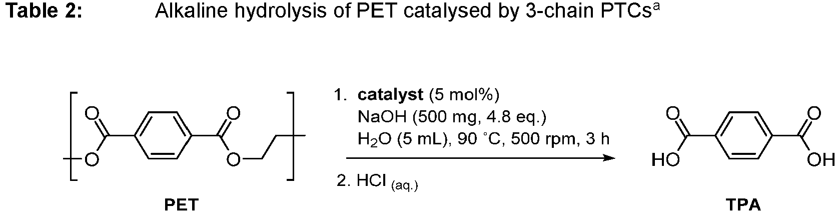

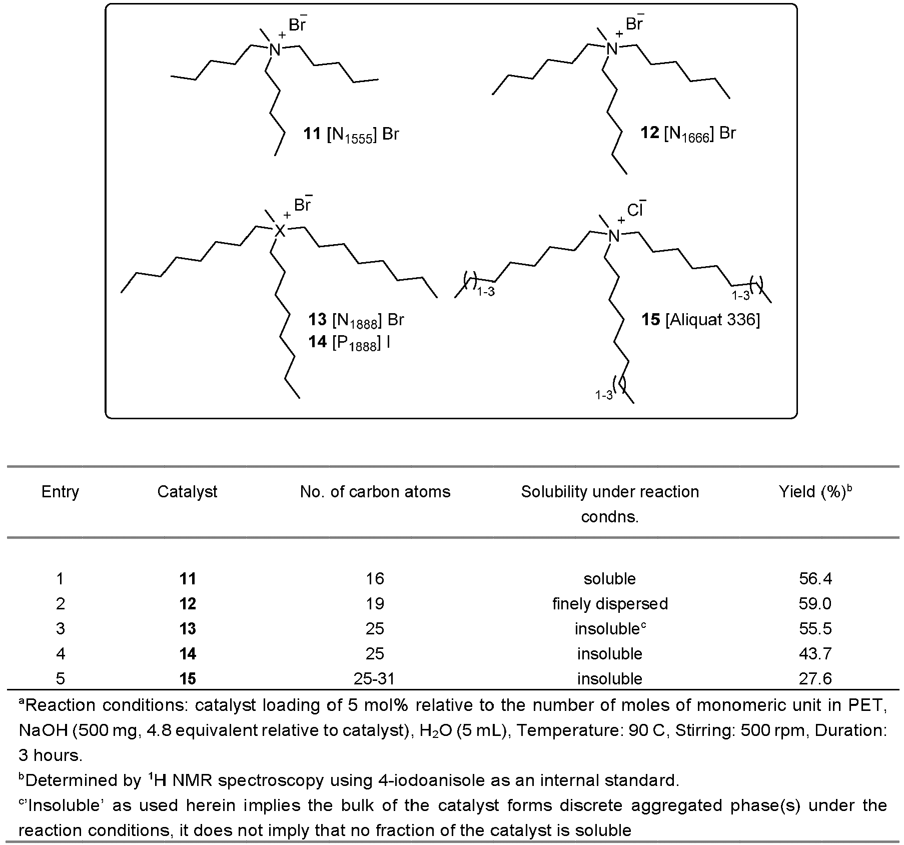

The evaluation of catalysts characterised by 3 longer chains is outlined in Table 2. The tripentylmethylammonium species **11** facilitated the formation of **2** in appreciable yield (entry 1). The partially soluble, finely dispersed homologue **12** is capable of marginally greater activity (entry 2) - however as observed earlier (*vide supra*), lipophilicity could not thereafter be increased with advantage (*i*.*e*. **13-15,** entries 3-5).

In Table 3 the alkaline hydrolysis of PET catalysed by 2-chain catalysts was assessed. The two-chain catalyst class were the most useful and instructive (Table 3). The soluble catalyst **16** possesses only 14 carbon atoms yet could facilitate hydrolysis with >40% yield (entry 1) - considerably greater than that associated with the use of the 16-carbon symmetrical material **5** (compare to Table 1, entry 7). Augmentation of each longer chain by one methylene unit (*i*.*e*. **17,** entry 2) resulted in a soluble catalyst with 16-carbon atoms and strikingly improved efficacy superiorto that associated with any catalyst hitherto evaluated.

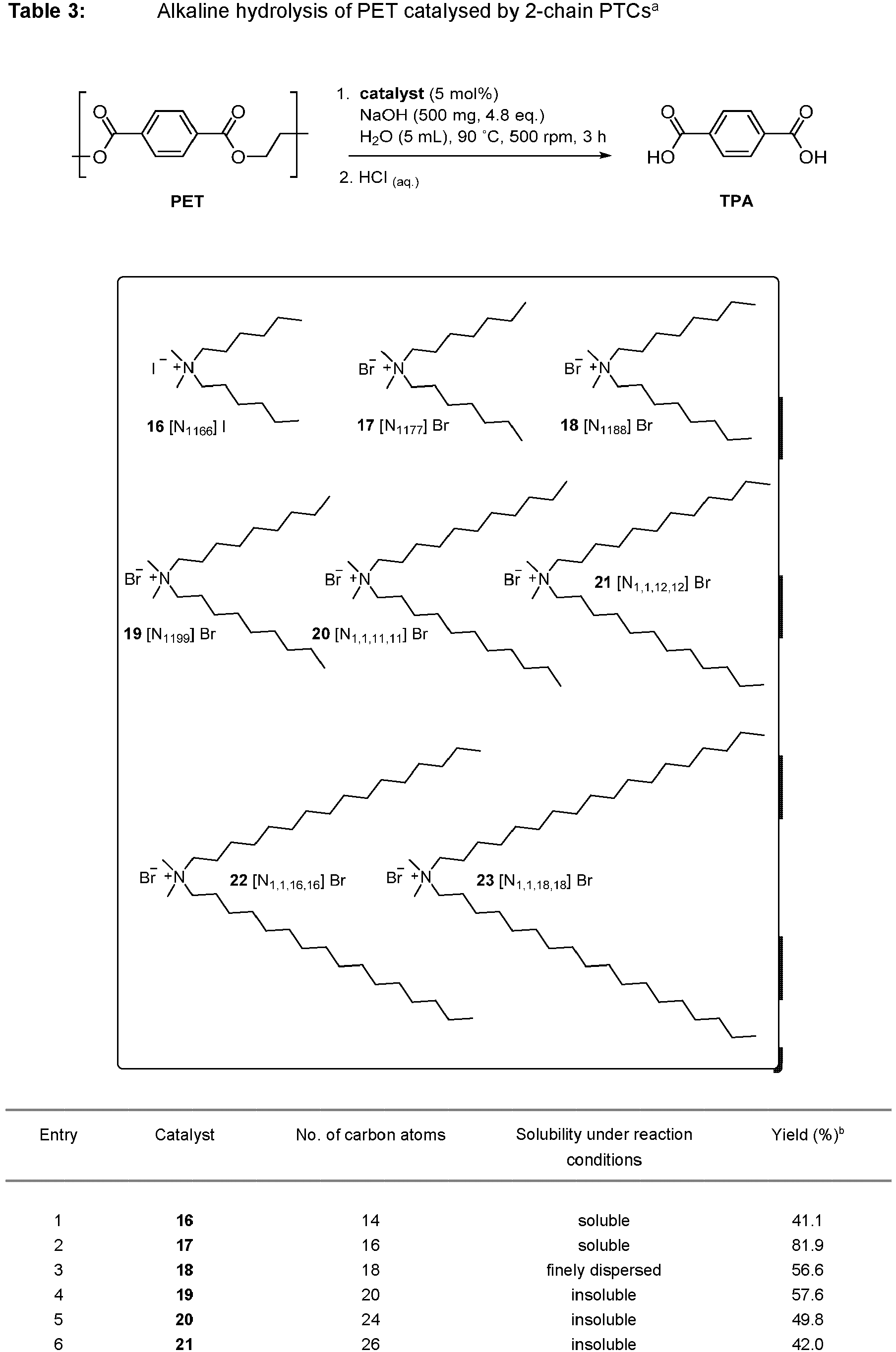

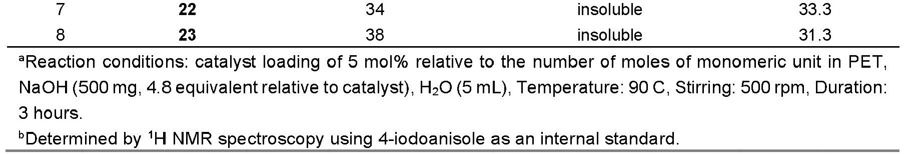

Most interestingly, further elongation of the 2 chains by a methylene unit (*i*.*e*. catalyst **18,** entry 3) resulted a finely dispersed system and a reduction in performance. As before, once a design change led to catalyst insolubility without fine dispersion under the reaction conditions, efficacy declined and all further chain elongations resulted in decreasingly active catalysts (*i*.*e*. **19-23,** entries 4-8).

Single chain catalysts, such as quaternary ammonium salts comprising a long alkyl chain (Table 4) proved relatively ineffectual as catalysts, whether soluble or not (*i*.*e*. **24-27,** entries 1-4). Furthermore, these catalysts gave rise to emulsions which complicate the isolation of **TPA.** The phosphonium salts **28** and **29** are included here and mediate hydrolysis with moderate efficacy (superior to that associated with **24-27,** entries 4-6). These catalysts possess one chain longer than the others, yet their 'small' substituents are of 4-6 carbon atoms in length. Hence, they can be seen as a hybrid of single-chain (Table 4) and mid-sized symmetrical systems (e.g. 3, Table 1) - which would correlate well with the levels of activity observed. From this perspective, the longer chain is not contributing to efficacy more than the shorter substituents - and it is noteworthy that adherence of the PET flakes to each other was observed in both experiments.

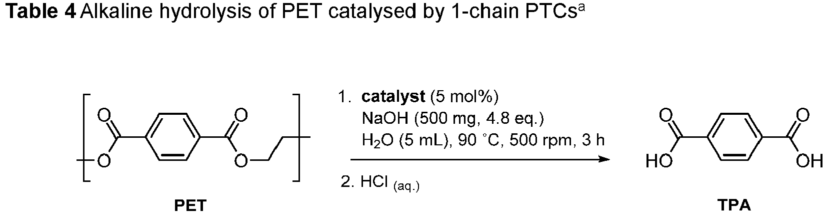

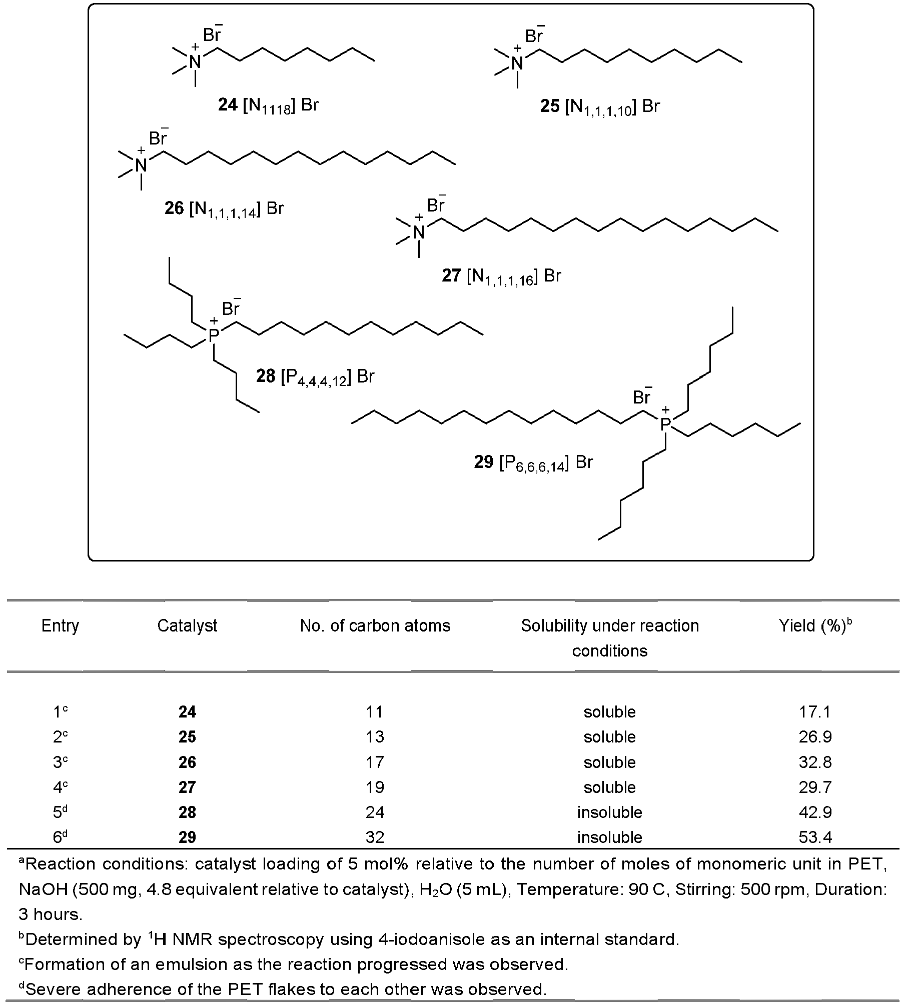

Catalysts incorporating benzyl (or similar) units were next examined (Table 5). It was hypothesised that these catalysts would hold potential due to the possibility of attractive □-stacking interactions with the polymer.

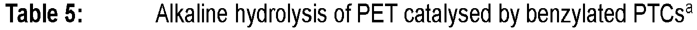

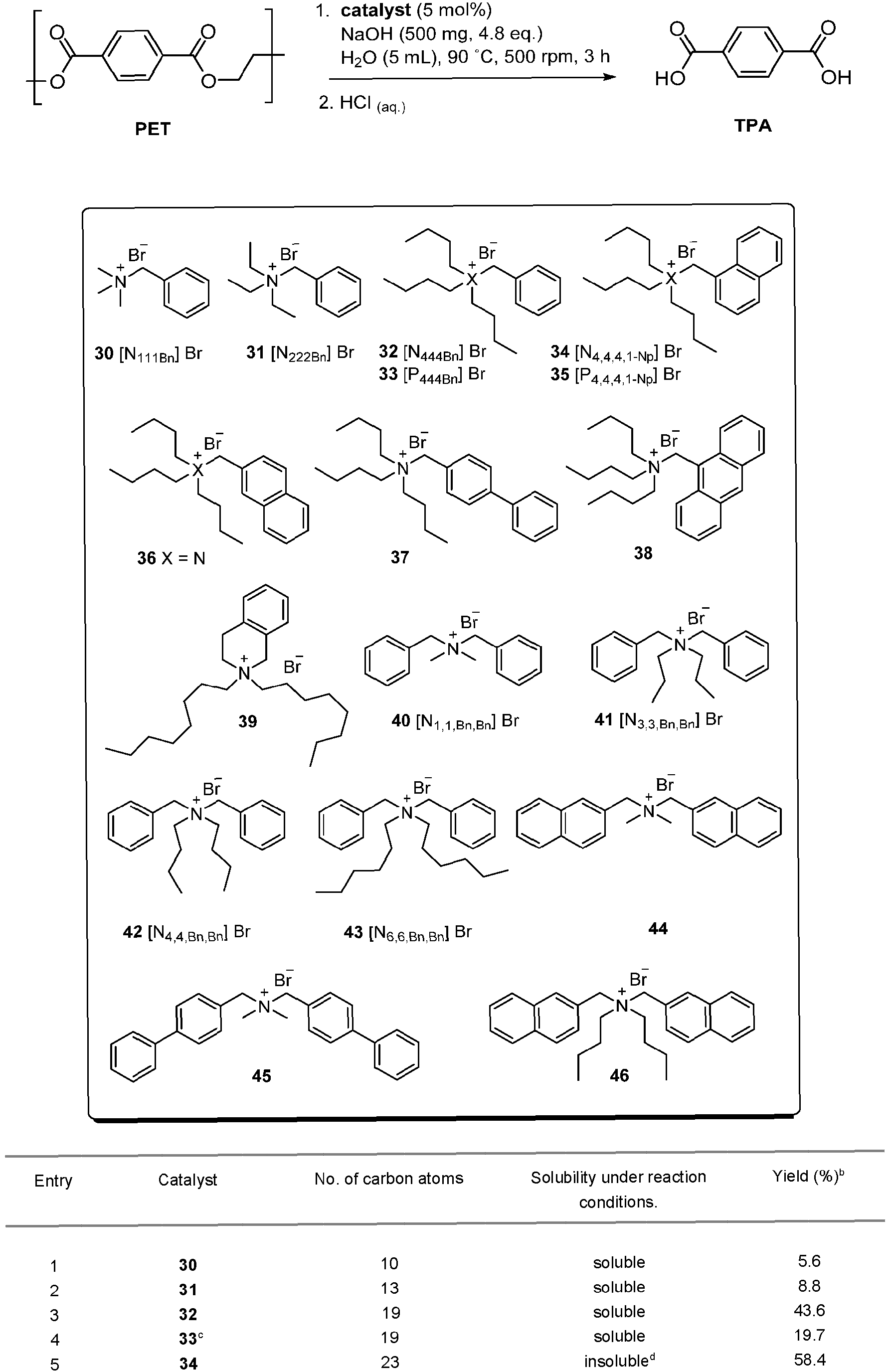

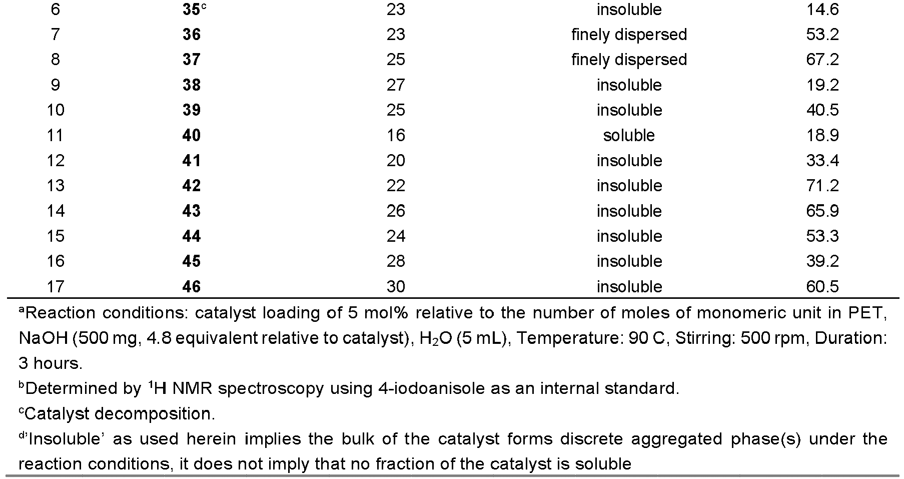

The small and soluble trimethylbenzyl ammonium salt **30** and its triethyl homologue **31** (entries 1-2) exhibited little activity under these conditions. The considerably more lipophilic ammonium salt **32** was shown to be a more suitable catalyst (entry 3), while it's phosphonium variant **33** decomposed (entry 4).

Extension of the pi-system was generally advantageous (*i*.*e*. catalysts **34-38** entries 5-6) unless either a phosphonium salt (entry 7) or an anthracene unit (entry 9) was involved. The dioctylisoquinolinium salt **39** (entry 10) was a moderately effective catalyst which lacked the activity of simpler systems mentioned above - so investigations along these lines were halted and attention switched to novel dibenzylated systems.

As expected, the small, soluble salt **40** did not excel as catalyst (entry 11), however its dipropyl- and dibutyl- analogues **(41** and **42,** entries 12 and 13 respectively) represented significant improvements - with the latter catalyst promoting the reaction with >70% yield. Most interestingly, the immediate penalty paid from an efficiency standpoint when catalysts in previous classes became wholly insoluble in the reaction medium is not of the same magnitude in this class of promoter - as can be seen from the impressive performance of the insoluble **42** and the even more lipophilic variant **43** (entry 14); which aggregate during the reaction and do not visibly interact with the PET. *Bis*-naphthyl/*bis-*biphenyl analogues of **40** and **42** (*i*.*e*. catalysts **44, 45 and 46,** entries 15-17) proved to be serviceable catalysts yet all were less effective than catalyst **42.**

The efficacy of aromatic and ionophore catalysts was next investigated (Table 6).

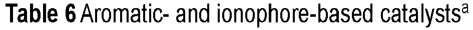

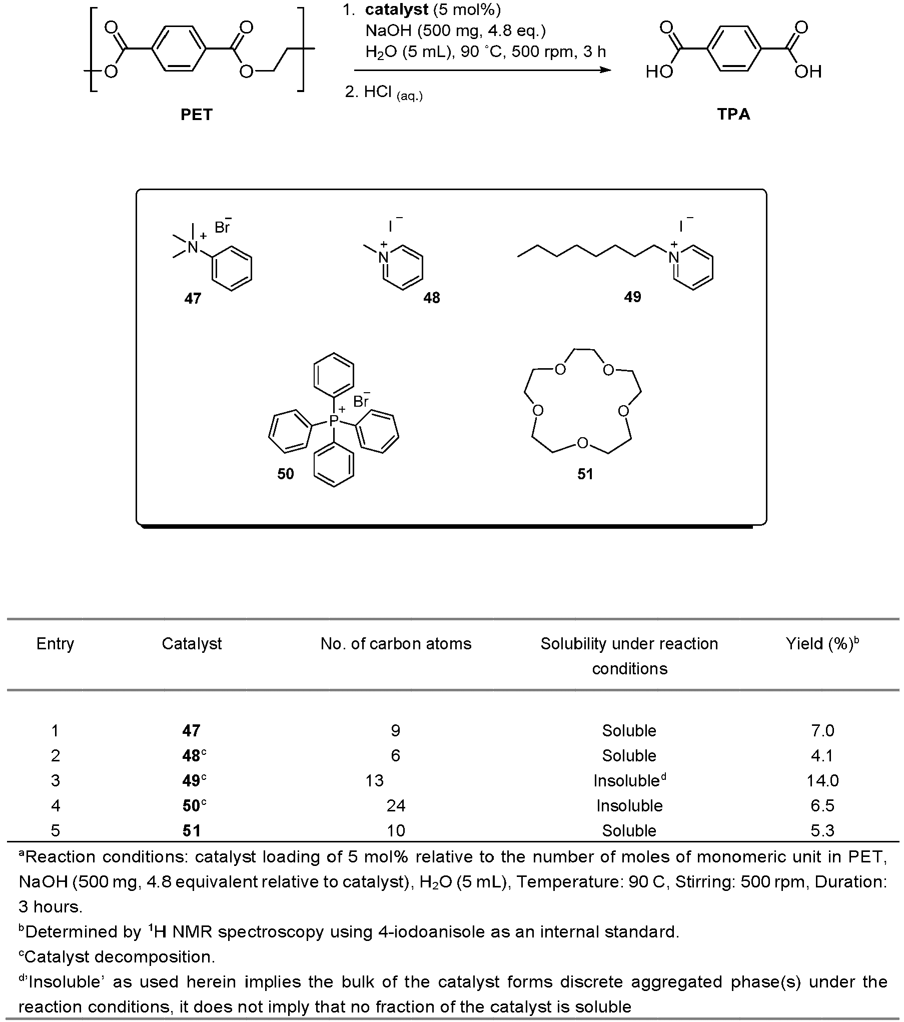

The simple trimethylanilinium species **47** possessed little activity (entry 1) while both pyridinium salts **48 and 49** and the tetraphenylphosphonium salt **50** decomposed (entries 2-4). The ionophore **51** (15-crown-5) - an efficient binder of Na cations - was also inactive, which strongly indicates that effective delivery of the hydroxide anion to the PET surface is most important for catalyst competency.

The effect of increasing lipophilicity on catalyst performance is provided in Scheme 2.

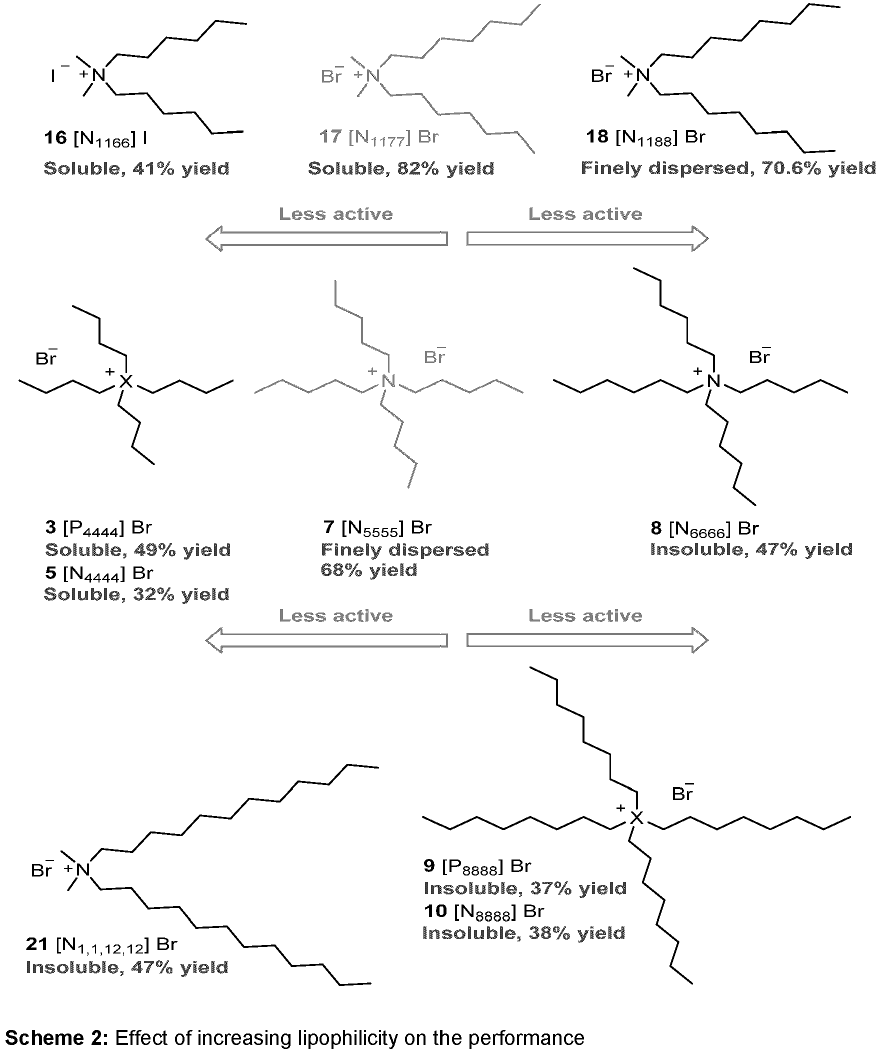

Without being bound by theory, it is considered that in ammonium and phosphonium PTCs as classified herein (symmetrical, 3-chain catalysts, 2-chain catalysts and 1-chain catalysts), which catalysts comprising aliphatic chains tethered to the nitrogen or phosphorous atom, catalyst performance is maximized when the catalyst is is as lipophilic as possible while being either soluble or finely dispersed (cloudy solution) in the reaction medium (see Scheme 2 above). It is thought that such favourable lipophilicity and solubility avoids a triphasic reaction medium scenario and explains why seemingly very small structural changes to the most lipophilic soluble/finely dispersed systems can lead to dramatic losses of activity (*e*.*g*. compare the activity of **16** and **18** to **17,** and **5** and **8** to **7**)**.** It may also account for the discrepancies in literature data - comparing studies using different loadings, reaction temperatures and NaOH concentrations is likely to be evaluating catalysts under very different conditions *vis a vis* catalyst solubility.

Once an aliphatic catalyst is insoluble and aggregating under the reaction conditions, further increases in catalyst lipophilicity are deleterious to activity (*e*.*g*. compare **18** to **21** and **8** to **10;** also the more lipophilic phosphonium salt **3** is superior to the less lipophilic ammonium salt **5** (both soluble), yet the phosphonium salt **9** is marginally inferior to **10** - as both are insoluble). This would imply that either the majority of the catalysis is carried out by that mole fraction of the catalyst present in aqueous solution, or that bigger, insoluble catalysts are incrementally less able to extract hydroxide from aqueous solution and deliver it to the surface of the also insoluble PET, or both.

When comparing symmetrical catalysts, 3-chain catalysts, 2-chain catalysts and 1-chain catalysts as defined herein, 2-chain catalysts were clearly superior. The general order of efficacy is as follows:
2-Chain catalysts > 3-chain catalysts >> 1-chain catalysts

This can be clearly seen by comparing the activity of catalysts **17**, **11** and **5** each of which comprises 16 carbon atoms, and also catalyst **26** which contains 17 carbon atoms.

It is thought that the 2-chain catalysts such as catalysts **17** and **18,** represent an advantageous balance between being able to deliver coordinated hydroxide to the ester carbonyl being attacked (facilitated by a small hydrophilic 'head' unlikely to cause significant steric hindrance) and the ability to associate with the PET surface through Van der Waals attractive forces between the hydrophobic polymer and the two long aliphatic catalyst chains.

In contrast to the 2-chain and 3-chain catalysts comprising 16 carbon atoms, debenzylated species 40 which also contains 16 carbon atoms is less active than catalysts 17, 11 or 15. However, as outlined above, for benzylated catalysts, a general improvement in catalyst performance was observed as the pi-system is extended (Table 5). In addition, benzylated phosphonium salts were unsuitable for catalysis under these reaction conditions due to catalyst decomposition.

It was thought that if the solubility of an active, soluble catalyst is reduced to the point of heterogeneity, that activity would be negatively impacted, while the opposite would be expected if an active, finely dispersed catalyst was rendered soluble. To test this, the insoluble iodide variant of the highly active, soluble catalyst **17** (*i*.*e*. **52)** and the soluble chloride analogue of the less active higher finely dispersed homologue **18** (*i*.*e*. **53)** were synthesised and evaluated (Table 7). The heterogenous iodide **52** proved markedly inferior to **17,** (entries 1-2) while the soluble, more lipophilic cation containing (than **17**) catalyst **53** accelerated the PET depolymerisation more efficiently than all other catalysts evaluated in this study (entries 3-4).

**Table 7 Manipulation of catalyst solubility and activity via the halide counterion^{a}**

| 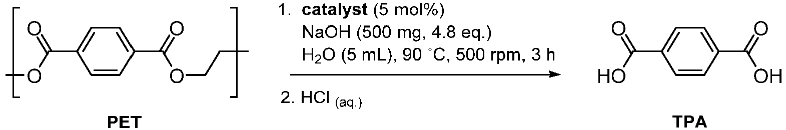 | | | | |
|---|---|---|---|---|
| 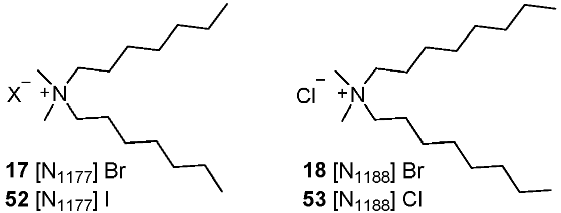 | | | | |
| Entry | Catalyst | No. of carbon atoms | Solubility under reaction conditions. | Yield (%)^{b} |
| 1 | **17^{c}** | 16 | soluble | 81.9 |
| 2 | **52** | 16 | insoluble^{d} | 58.4 |
| 3 | **18^{c}** | 18 | insoluble | 70.6 |
| 4 | **53** | 18 | soluble | 88.9 |
| ^{a}Reaction conditions: catalyst loading of 5 mol% relative to the number of moles of monomeric unit in PET, NaOH (500 mg, 4.8 equivalent relative to catalyst), H₂O (5 mL), Temperature: 90 C, Stirring: 500 rpm, Duration: 3 hours. | | | | |
| ^{b}Determined by ¹H NMR spectroscopy using 4-iodoanisole as an internal standard | | | | |
| ^{c}Data from Table 3 | | | | |
| ^{d}'Insoluble' as used herein implies the bulk of the catalyst forms discrete aggregated phase(s) under the reaction conditions, it does not imply that no fraction of the catalyst is soluble | | | | |

Finally, since the reaction is heterogeneous and the flakes relatively large (relative to powders), we investigated whether reducing the volume of water in the reaction by 50% would bring about significant improvements in efficacy - it was thought that by so reducing the volume of water both hydroxide/catalyst concentration would be doubled while the PET flakes would be in contact with a greater proportion of the bulk solution - and advantageously, the reaction would generate less aqueous waste. Accordingly, we repeated the standard PET hydrolysis with half the volume of aqueous solvent and with only 1 mol% of the benchmark bromide catalyst **17.** The result was the isolation of TPA in near quantitative yield after 3 h (Scheme 3).

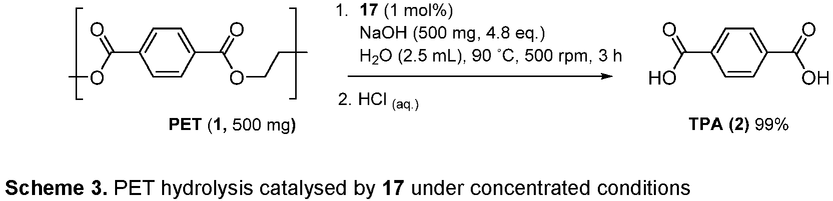

Advantageously, the present invention provides a high yielding method for depolymerizing PET or polymers comprising PET units to produce TPA. The method is carried out efficiently at a high concentration of PET, and using comparatively large PET flakes in comparison to those used in prior art methods. Thus, the present method is advantageously scalable, and less environmentally impactful than prior art methods, particularly, having less water waste than many prior art methods.

### Reaction Protocol for PET hydrolysis at 100 g/L starting concentration of PET

An oven dried carousel flask was charged with water (5 mL), sodium hydroxide (0.500 g) and catalyst (5 mol %)^{a}. The flask was placed under an atmosphere of nitrogen (balloon), and the reaction was stirred for 20 min at 90 °C. Polyethylene terephthalate flakes (ca. 5 mm squares, 0.500 g) were added and the mixture was stirred (500 RPM) for 3 h. The flask was removed from the carousel and cooled in an ice-bath for 10 min. The reaction mixture was then filtered, and the residue was washed with water (5 mL x 2). The filtrate was adjusted, with cooling, to pH 2-3 using dilute HCl and the resulting precipitate was filtered. The filtrate was washed with water (5 mL) and the product was dried for 4 h in a vacuum oven at 60 °C.

^{a} Mol% of catalyst is related to the number of moles of monomeric units (2.6 mmol) present in 0.500 g of polymer.

### Reaction Protocol for PET hydrolysis at 200 g/L starting concentration of PET

An oven dried carousel flask was charged with water (2.5 mL), sodium hydroxide (0.500 g, 12.5 mmol) and catalyst **17** (0.0084 g, 0.026 mmol, 1 mol%).^{a} The flask was placed under an atmosphere of nitrogen (balloon), and the reaction was stirred for 20 min at 90 °C. Polyethylene terephthalate flakes (ca. 5 mm squares, 0.500 g) were added and the mixture was stirred (500 RPM) for 3 h. The flask was removed from the carousel and cooled in an ice-bath for 10 min. The reaction mixture was then filtered, and the residue was washed with water (5 mL x 2). The filtrate was adjusted, with cooling, to pH 2-3 using dilute HCl and the resulting precipitate was filtered. The filtrate was washed with water (5 mL x 2) and the product was dried for 4 h in a vacuum oven at 60 °C. TPA was isolated as a white solid (0.43 g, 99%). M.p. 299-301 °C.
^{a} Mol% of catalyst is related to the number of moles of monomeric units (2.6 mmol) present in 0.500 g of polymer.
δ_{H} (400 MHz, DMSO-d₆): 13.29 (br s, 2H), 8.04 (s, 4H) ppm.
δ_{c} (101 MHz, DMSO-d₆): 166.6, 134.4, 129.4 ppm.
vₘₐₓ (neat)/cm⁻¹: 2827, 2661, 2546, 1673, 1423, 1278, 928, 726.

### Synthesis of Compound 11:

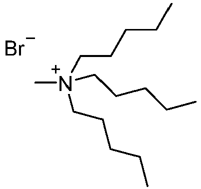

A 25 mL round-bottomed flask equipped with a stirring bar was charged with methylamine (2.5 mL, 2.0 M in THF, 5.0 mmol), acetonitrile (5 mL) and potassium carbonate (2.21 g, 16.0 mmol). 1-Bromopentane (1.86 mL, 15.0 mmol) was added dropwise at room temperature. The flask was equipped with a condenser and the solution was heated under reflux for 24 h before the mixture was filtered. The solvent was removed under reduced pressure and the product was triturated in diethyl ether. The product was dried *in vacuo* yielding **11** as a colourless oil (0.95 g, 59%).
*δ_{H}* (400 MHz, DMSO-*d*₆): 3.27-3.14 (m, 6H), 2.95 (s, 3H), 1.71-1.53 (m, 6H), 1.42-1.19 (m, 12H), 0.89 (t, *J* = 7.2 Hz, 9H) ppm.
δ*_{C}* (101 MHz, DMSO-*d*₆): 60.5, 47.4, 27.9, 21.6, 21.0, 13.7 ppm.
HRMS (m/z - ESI⁺): Found: 242.2847 (M⁺) C₁₆H₃₆N⁺ Requires: 242.2842.
*v*ₘₐₓ (neat)/cm⁻¹: 2955, 2931, 2809, 1464, 1379, 1037, 935, 851, 774, 732.

### Synthesis of Compound 12:

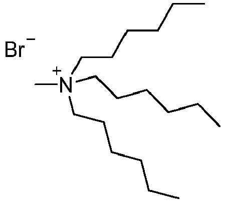

A 25 mL round-bottomed flask equipped with a stirring bar was charged with methylamine (2.0 mL, 2.0 M in THF, 4.0 mmol), acetonitrile (4 mL) and potassium carbonate (2.21 g, 16 mmol). 1-Bromohexane (1.6 mL, 14.0 mmol) was added dropwise at room temperature. The flask was equipped with a condenser and the solution was heated under reflux for 24 h before the mixture was filtered. The solvent was removed under reduced pressure and the product was triturated in diethyl ether. The product was dried *in vacuo* yielding **12** as a brown oil (0.53 g, 37%).
*δ_{H}* (400 MHz, DMSO-*d*₆): 3.23-3.13 (m, 6H), 2.93 (s, 3H), 1.69-1.53 (m, 6H), 1.39-1.21 (m, 18H), 0.88 (t, *J* = 6.3 Hz, 9H) ppm.
*δ_{C}* (101 MHz, DMSO-*d*₆): 60.5, 47.5, 30.6, 25.4, 21.8, 21.3, 13.8 ppm.
HRMS (m/z - ESI⁺): Found: 284.3319 (M⁺) C₁₉H₄₂N⁺ Requires: 284.3312.
*v*ₘₐₓ (neat)/cm⁻¹: 2955, 2926, 2859, 1464, 1379, 1058, 939, 877, 728.

### Synthesis of Compound 14:

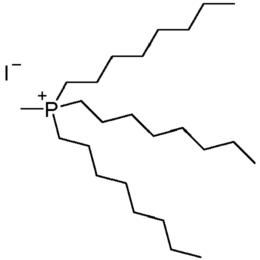

A 25 mL round-bottomed flask equipped with a stirring bar was charged with trioctylphosphine (1.34 mL, 3.0 mmol) and acetonitrile (3 mL). Iodomethane (0.31 mL, 5.0 mmol) was added dropwise at 0 °C. The reaction mixture was stirred at room temperature for 1 h. The solvent was removed under reduced pressure and the product was triturated in diethyl ether. The product was dried *in vacuo* yielding **14** as a colourless gum (1.31 g, 85%).
Spectral data for this compound were consistent with those in literature.²
*δ_{H}* (400 MHz, CDCl₃): 2.50-2.43 (m, 6H), 2.11 (d, *J* = 13.3 Hz, 3H), 1.62-1.41 (m, 12H), 1.38-1.17 (m, 24H), 0.86 (t, *J* = 6.6 Hz, 9H) ppm.
*δ_{P}* (162 MHz, CDCl₃): 31.2 ppm.
HRMS (m/z - ESI⁺): Found: 385.3965 (M⁺) C₂₅H₅₄P⁺ Requires: 385.3958.
*v*ₘₐₓ (neat)/cm⁻¹: 2955, 2923, 2855, 1459, 1306, 906, 720.

### Synthesis of Compound 16:

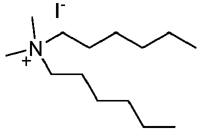

A 100 mL round-bottomed flask equipped with a stirring bar was charged with dihexylamine (1.5 mL, 6.4 mmol), acetonitrile (20 mL) and potassium carbonate (5.30 g, 38.6 mmol). Iodomethane (1.6 mL, 25.7 mmol) was added dropwise at 0 °C. The reaction mixture was stirred at room temperature for 30 min before the mixture was filtered. The solvent was removed under reduced pressure and the product was triturated in diethyl ether. The product was dried *in vacuo* yielding **16** as an off-white solid (1.51 g, 69%). M.p. 58-62 °C.
*δ_{H}* (400 MHz, DMSO-*d*₆): 3.26 - 3.22 (m, 4H), 3.00 (s, 6H), 1.73 - 1.57 (m, 4H), 1.40 - 1.22 (m, 12H), 0.89 (t, *J* = 6.4 Hz, 6H) ppm.
*δ_{c}* (101 MHz, DMSO-*d*₆): 62.9, 49.9, 30.6, 25.4, 21.8, 21.6, 13.8 ppm.
HRMS (*m*/*z* - ESI⁺): Found: 214.2532 (M⁺) C₁₄H₃₂N⁺ Requires: 214.2529.
*v*ₘₐₓ (neat)/cm⁻¹: 3003, 2955, 2925, 2858, 1483, 1467, 936, 885, 727.

### Synthesis of Compound: 17 Dimethyldiheptylammonium bromide

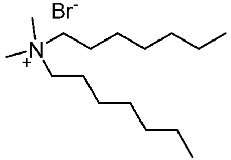

A 25 mL round-bottomed flask equipped with a stirring bar was charged with dimethylamine (3.0 mL, 2.0 M in THF, 6.0 mmol), acetonitrile (6 mL) and potassium carbonate (4.15 g, 30.0 mmol). 1-Bromoheptane (2.8 mL, 17.8 mmol) was added dropwise at room temperature. The flask was equipped with a condenser and the solution was heated under reflux for 24 h before the mixture was filtered. The solvent was removed under reduced pressure and the product was triturated in diethyl ether. The product was dried *in vacuo* yielding **17** as a colourless gum (1.41 g, 73%).
*δ_{H}* (400 MHz, DMSO-*d*₆): 3.26 - 3.18 (m, 4H), 2.98 (s, 6H), 1.70 - 1.57 (m, 4H), 1.37 - 1.19 (m, 16H), 0.87 (t, *J* = 6.3 Hz, 6H) ppm.
*δ_{H}* (101 MHz, DMSO-*d*₆): 62.9, 49.9, 31.0, 28.1, 25.7, 21.9, 21.6, 13.9 ppm.
HRMS (m/z - ESI⁺): Found: 242.2844 (M⁺) C₁₆H₃₆N⁺ Requires: 242.2842.
*v*ₘₐₓ (neat)/cm⁻¹: 3011, 2924, 2858, 1467, 1275, 904, 729, 697.

### Synthesis of Compound 19

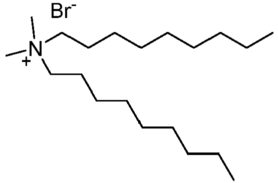

A 25 mL round bottom flask equipped with a stirring bar was charged with dimethylamine (2.0 mL, 2.0 M in THF, 4.0 mmol), acetonitrile (4 mL) and potassium carbonate (2.21 g, 16.0 mmol). 1-Bromononane (2.7 mL, 14.1 mmol) was added and the solution was stirred at room temperature for 16 h before the mixture was filtered and the filtrate was dried *in vacuo.* The product was purified by flash column chromatography (CH₂Cl₂ to CH₂Cl₂/MeOH (95:5)) to afford **19** as a yellow oil (0.271 g, 20% yield).
*δ*_{H} (400 MHz, CDCl₃): 3.56-3.47 (m, 4H), 3.40 (s, 6H), 1.77-1.63 (m, 4H), 1.48-1.18 (m, 24H), 0.88 (t, *J* = 7.0 Hz, 6H) ppm.
*δ*_{C} (400 MHz, CDCl₃): 64.1, 51.4, 31.9, 29.4, 29.3, 29.2, 26.4, 22.9, 22.7, 14.2 ppm.
HRMS (m/z -ES): Found: 289.3468 (M⁺) C₂₀H₄₄N⁺ Requires: 298.3468.
*v*ₘₐₓ (neat)/cm⁻¹: 2922, 2854, 1467, 927, 722.

### Synthesis of Compound 20

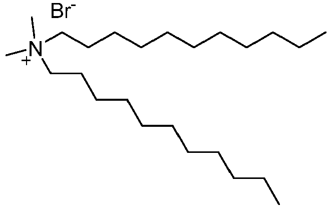

A 25 mL round bottomed flask was charged with acetonitrile (2 mL), dimethylamine (2.0 mL, 2.0 M solution in THF, 4.0 mmol) and potassium carbonate (2.21 g, 16.0 mmol). 1-Bromoundecane (3.12 mL, 14.0 mmol) was diluted with anhydrous acetonitrile (2 mL) and added dropwise to the reaction mixture at room temperature. The flask was equipped with a condenser and the solution was heated under reflux for 24 h before the mixture was filtered. The residual white solid was washed with acetonitrile (3 x 5 mL) and the filtrate was concentrated under reduced pressure. The resulting oil was purified by flash chromatography (CH₂Cl₂ to CH₂Cl₂/MeOH (9:1)) to yield **20** as a white solid (1.14 g, 66%). M.p. 159-161 °C.
*δ*_{H} (400 MHz, CDCl₃): 3.57-3.46 (m, 4H), 3.41 (s, 6H), 1.74-1.63 (m, 4H), 1.43-1.20 (m, 32H), 0.87 (t, 6H, *J* = 6.8 Hz) ppm.
*δ*_{C} (100 MHz, CDCl₃): 64.0, 51.4, 32.0, 29.7, 29.6, 29.5, 29.4, 29.3, 26.4, 22.9, 22.8, 14.2 ppm.
HRMS (m/z - ESI⁺): Found: 354.4098 (M⁺) C₂₄H₅₂N⁺ Requires: 354.4094.
vₘₐₓ (neat)/ cm⁻¹: 2951, 2921, 2853, 1466, 1455, 889, 720.

### Synthesis of Compound 31

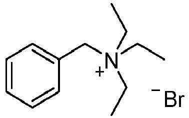

A 25 mL round bottom flask equipped with a stirring bar was charged with triethylamine (1.4 mL, 10.0 mmol), THF (5 mL) and benzyl bromide (0.6 g, 5.1 mmol). The reaction mixture was stirred at room temperature for 48 h and the resulting precipitate was filtered. The solid was dissolved in the minimum volume of CH₂Cl₂ before being added to ice cold diethyl ether. The resulting suspension was filtered and the solid was washed with diethyl ether (3X5 mL) and dried *in vacuo* to give **31** as a white solid (1.21 g, 89%). M.p. 196-198 °C.
*δ*_{H} (400 MHz, CDCl₃): 7.53-7.28 (m, 5H), 4.67 (s, 2H), 3.35 (q, *J* = 7.2 Hz, 6H), 1.36 (t, *J* = 7.2 Hz, 9H) ppm.
*δ*_{C} (101 MHz, CDCl₃): 132.4, 130.6, 129.3, 127.1, 61.3, 52.9, 8.6 ppm.
HRMS (m/z- ESI⁺): Found: 192.1748 (M⁺) C₁₃H₂₂N⁺ Requires: 192.1747.
vₘₐₓ (neat)/ cm⁻¹: 2970, 2014, 1867, 1457, 1455, 766, 713.

### Synthesis of Compound 32:

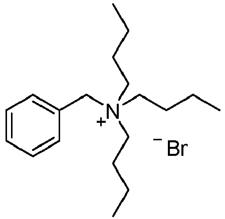

A 25 mL round bottom flask equipped with a stirring bar was charged with tributylamine (1.8 mL, 7.6 mmol), THF (5 mL) and benzyl bromide (0.60 g, 5.1 mmol). The reaction mixture was stirred at room temperature for 48 h and the resulting precipitate was filtered. The solid was dissolved in the minimum volume of CH₂Cl₂ before being added to ice cold diethyl ether. The resulting suspension was filtered and the solid was washed with diethyl ether (3x5 mL) and dried *in vacuo* to give 32 as a white solid (1.67 g, 93%).
*δ*_{H} (400 MHz, DMSO-*d*₆): 7.54-7.48 (m, 5H), 4.52 (s, 2H), 3.12-3.05 (m, 6H), 1.77-1.66 (m, 6H), 1.36-1.26 (m, 6H), 0.95 (t, *J* = 7.5 Hz, 9H) ppm.
*δ*_{C} (101 MHz, DMSO-*d*₆): 132.5, 130.4, 129.1, 127.8, 61.2, 57.5, 23.3, 19.2, 13.5 ppm.
HRMS (m/z - ESI⁺): Found: 276.2686 (M⁺) C₁₉H₃₄N⁺ Requires: 276.2686.
vₘₐₓ (neat)/ cm⁻¹: 2960, 2872, 1476, 1458, 723, 702.

### Synthesis of Compound 33:

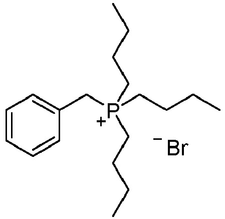

A 50 mL round bottomed flask was charged with anhydrous acetonitrile (10 mL) and tributylphosphine (2.02 g, 10.0 mmol). The emulsion was kept under an argon atmosphere, stirred vigorously for 5 min, and cooled to 0 °C. Benzyl bromide (1.54 g, 9.0 mmol) was added dropwise to the emulsion and the resulting mixture was stirred at room temperature for 16 h. The crude mixture was evaporated under reduced pressure. Diethyl ether (30 mL) was added and the resulting mixture was filtered. The solid was washed with diethyl ether (3 × 20 mL) to yield 33 as a white solid (3.28 g, 98%). M.p. 143.0-144.0 °C. (Lit.,² 143 °C)
Spectral data for this compound were consistent with those in literature.⁴
*δ*_{H} (400 MHz, DMSO-*d*₆): 7.46-7.33 (m, 5H), 3.83 (d, *J* = 15.5 Hz, 2H), 2.21-2.10 (m, 6H), 1.48-1.31 (m, 12H), 0.88 (t, *J* = 7.0 Hz, 9H) ppm.
*δ*_{C} (100 MHz, DMSO-*d*₆): 130.0 (d, *J* = 4.8 Hz), 129.3, 129.2 (d, *J* = 3.1 Hz), 128.0 (d, *J* = 3.4 Hz), 25.4 (d, *J* = 44.5 Hz), 23.3 (d, *J* = 15.7 Hz), 22.5 (d, *J* = 4.5 Hz), 17.4 (d, *J* = 47.1 Hz), 13.2 ppm.
HRMS (*m*/*z* - ESI⁺): Found: 293.2397 (M⁺) C₁₉H₃₄P⁺ Requires: 293.2393.

### Synthesis of Compound 34:

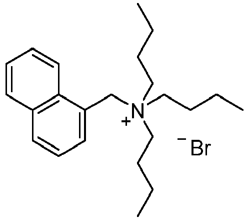

A 25 mL round bottom flask equipped with a stirring bar was charged with tributylamine (3.6 mL, 15.1 mmol), THF (5 mL) and (1-bromomethyl)naphthalene (1.11 g, 5.0 mmol). The reaction mixture was stirred at room temperature for 48 h and the resulting precipitate was filtered. The solid was dissolved in the minimum volume of CH₂Cl₂ before being added to ice cold diethyl ether. The resulting suspension was filtered and the solid was washed with diethyl ether (3 x 5 mL) and dried *in vacuo* to give **34** as a white solid (1.67 g, 82%). M.p. 120-121 °C
*δ*_{H} (600 MHz, DMSO-*d*₆): 8.09-8.05 (m, 2H), 8.03-7.98 (m, 2H), 7.67-7.60 (m, 2H), 7.57 (dd, *J* = 8.4, 1.7 Hz, 1H), 4.69 (s, 2H), 3.20-3.09 (m, 6H), 1.83-1.72 (m, 6H), 1.39 - 1.30 (m, 6H), 0.96 (t, *J* = 7.4 Hz, 9H) ppm.
*δ*_{C} (151 MHz, DMSO-*d*₆): 133.3, 132.9, 132.5, 128.9, 128.6, 128.3, 127.7, 127.6, 127.0, 125.3, 61.3, 57.5, 23.3, 19.3, 13.5 ppm.
HRMS (m/z - ESI+): Found: 326.2849 (M+) C23H36N+ Requires: 326.2842.
vₘₐₓ (neat)/ cm-1: 2963, 2935, 2875, 1969, 1815, 1485, 840, 788, 771.

### Synthesis of Compound 35:

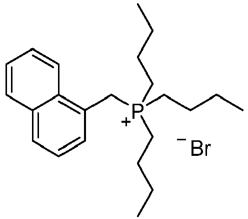

A 25 mL round bottomed flask was charged with anhydrous acetonitrile (3 mL) and tributylphosphine (1.01 g, 5.0 mmol). The emulsion was kept under an argon atmosphere, stirred vigorously for 5 min, and cooled to 0 °C. 1-(Bromomethyl)naphthalene (1.11 g, 5.0 mmol) was dissolved in anhydrous acetonitrile (2 mL), added dropwise to the emulsion and the resulting mixture was stirred at room temperature for 16 h. The crude mixture was evaporated under reduced pressure. Diethyl ether (15 mL) was added to initiate product precipitation. The product was filtered and the resulting solid was washed with diethyl ether (3 × 10 mL) to yield **35** as a white solid (1.64 g, 86%). M.p. 100-102 °C.
*δ*_{H} (600 MHz, DMSO-*d*₆): 8.03-7.87 (m, 4H), 7.61-7.52 (m, 2H), 7.52-7.44 (m, 1H), 4.01 (d, *J* = 15.5 Hz, 2H), 2.27-2.12 (m, 6H), 1.53-1.30 (m, 12H), 0.87 (t, *J* = 7.2 Hz, 9H) ppm.
*δ*_{C} (151 MHz, DMSO-*d*₆): 132.9 (d, *J* = 2.9 Hz), 132.2 (d, *J* = 2.5 Hz), 128.9 (d, *J* = 6.5 Hz), 128.8 (d, *J* = 2.3 Hz), 127.7, 127.6 (d, *J* = 3.9 Hz), 127.5, 126.9, 126.8, 126.5, 25.6 (d, *J* = 44.2 Hz), 23.3 (d, *J*=15.7 Hz), 22.5 (d, *J* = 4.5 Hz), 17.4 (d, J= 46.8 Hz), 13.2 ppm.
*δ*_{P} (162 MHz, DMSO-*d*₆): 33.0 ppm.
HRMS (*m*/*z* - ESI⁺): Found: 343.2551 (M⁺) C₂₃H₃₆P⁺ Requires: 343.2549.
vₘₐₓ (neat)/ cm⁻¹: 2957, 2929, 2871, 1465, 1094, 917, 861, 828, 744.

### Synthesis of Compound 36:

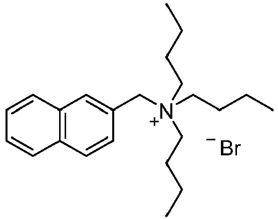

A 25 mL round bottom flask equipped with a stirring bar was charged with tributylamine (3.0 mL, 12.6 mmol), THF (5 mL) and (2-bromomethyl)naphthalene (1.11 g, 5.0 mmol). The reaction mixture was stirred at room temperature for 24 h and the resulting precipitate was filtered. The solid was dissolved in the minimum volume of CH₂Cl₂ before being added to ice cold diethyl ether. The resulting suspension was filtered and the solid was washed with diethyl ether (3 X 5 mL) and dried *in vacuo* to give **36** as a white solid (1.01 g, 49%). M.p. 137-139 °C.
*δ*_{H} (600 MHz, DMSO-*d*₆): 8.08-7.97 (m, 4H), 7.66-7.54 (m, 3H), 4.68 (s, 2H), 3.18-3.09 (m, 6H), 1.81-1.71 (m, 6H), 1.37-1.28 (m, 6H), 0.94 (t, *J* = 7.7 Hz, 9H) ppm.
*δ*_{C} (151 MHz, DMSO-*d*₆): 133.8, 133.4, 132.9, 128.4, 129.1, 128.7, 128.1, 128.1, 127.5, 128.0, 61.7, 58.0, 23.8, 19.7, 14.0 ppm.
HRMS (m/z - ESI⁺): Found: 326.2850 (M⁺) C₂₃H₃₆N⁺ Requires: 326.2842.
vₘₐₓ (neat)/cm⁻¹: 2962, 1484, 1371, 840, 787, 771.

### Synthesis of Compound 37:

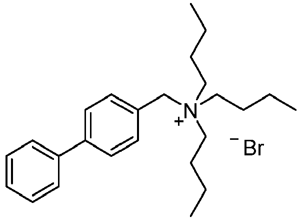

A 25 mL round bottom flask equipped with a stirring bar was charged with tributylamine (2.4 mL, 10.1 mmol), THF (5 mL) and 4-(bromomethyl)-1,1'-biphenyl (1.24 g, 5.0 mmol). The reaction mixture was stirred at room temperature for 24 h and the resulting precipitate was filtered. The solid was dissolved in the minimum volume of CH₂Cl₂ before being added to ice cold diethyl ether. The resulting suspension was filtered and the solid was washed with diethyl ether (3x5 mL) and dried *in vacuo* to give **37** as a white powder (1.01 g, 49%). M.p. 158-159 °C.
*δ*_{H} (600 MHz, DMSO-*d*₆): 7.87 (m, 2H), 7.75-7.72 (m, 2H), 7.60-7.56 (m, 2H), 7.52-7.48 (m, 2H), 7.44-7.40 (m, 1H), 4.57 (s, 2H), 3.16-3.09 (m, 6H), 1.80-1.70 (m, 6H), 1.38-1.29 (m, 6H), 0.96 (t, *J* = 7.4 Hz, 9H) ppm.
*δ*_{C} (151 MHz, DMSO-*d*₆): 141.8, 138.8, 133.2, 129.1, 128.1, 127.1, 126.9, 126.8, 60.9, 57.5, 23.3, 19.2, 13.5 ppm.
HRMS (*m*/*z* - ESI⁺): Found: 352.2999 (M⁺) C₂₅H₃₈N⁺ Requires: 352.2999.
vₘₐₓ (neat)/ cm⁻¹: 2960, 2872, 1483, 1461, 869, 765, 703.

### Synthesis of Compound 38:

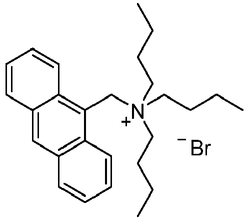

A 25 mL round bottom flask equipped with a stirring bar was charged with tributylamine (2.6 mL, 11.1 mmol), THF (5 mL) and 9-(bromomethyl)anthracene (1.00 g, 3.7 mmol). The reaction mixture was stirred at room temperature for 24 h and the resulting precipitate was filtered. The solid was dissolved in the minimum volume of CH₂Cl₂ before being added to ice cold diethyl ether. The resulting suspension was filtered and the solid was washed with diethyl ether (3x5 mL) and dried *in vacuo* to give **38** as a white powder (1.43 g, 79%). M.p. 137-139 °C.
*δ*_{H} (600 MHz, DMSO-*d*₆): 8.93 (s, 1H), 8.72 (app. d, 2H), 8.23 (app. d, 2H), 7.73 (app. t, *J* = 8.2 Hz, 2H), 7.63 (app. t, *J* = 7.7 Hz, 2H), 5.73 (s, 2H), 3.4-3.28 (m, 6H), 1.28-1.14 (m, 6H), 0.96 (m, 6H), 0.67 (t, *J* = 7.3 Hz, 9H) ppm.
*δ*_{C} (151 MHz, DMSO-*d*₆):132.4, 131.5, 130.9, 129.4, 127.5, 125.7, 124.4, 120.6, 60.0, 58.4, 24.0, 19.2, 13.1 ppm.
HRMS (*m*/*z* - ESI⁺): Found: 376.2999 (M⁺) C₂₇H₃₈N⁺ Requires: 376.2999.
vₘₐₓ (neat)/ cm⁻¹: 2959, 2873, 1467, 1378, 858, 746.

### Synthesis of Compound 39:

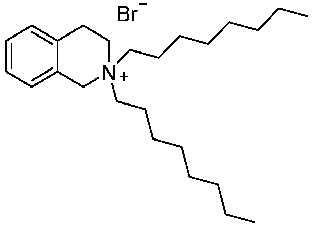

A 25 mL round bottomed flask under argon atmosphere, equipped with a stirring bar, was charged with acetonitrile (3 mL), potassium carbonate (0.70 g, 5.1 mmol) and tetrahydroisoquinoline (0.32 mL, 2.5 mmol). 1-Bromooctane (0.70 mL, 4.0 mmol) was added dropwise. The flask was equipped with a condenser and the solution was heated under reflux for 16 h. After cooling to room temperature, the solution was filtered and the filtrate was concentrated under reduced pressure. The resulting yellow oil was then dissolved in CH₂Cl₂ (1 mL) before being added dropwise to ice cold diethyl ether (15 mL) yielding a yellow precipitate. The product was purified by flash column chromatography (CH₂Cl₂ to CH₂Cl₂/MeOH (95:5)) to afford **39** as a white solid (0.184 g, 17% yield). M.p. 144-146 °C.
*δ*_{H} (600 MHz, DMSO-*d*₆): 7.38-7.28 (m, 3H), 7.20 (app.d, 1H), 4.61 (s, 2H), 3.69 (t, *J* = 6.3 Hz, 2H), 3.29-3.22 (m, 4H), 3.13 (t, *J* = 6.3 Hz, 2H), 1.76-1.66 (m, 4H), 1.35-1.20 (m, 20H), 0.87 (t, *J* = 6.7 Hz, 6H) ppm.
*δ*_{C} (151 MHz, DMSO-*d*₆): 130.7, 129.3, 128.6, 127.6, 127.5, 127.5, 60.4, 58.2, 55.5, 31.6, 28.9, 26.2, 23.5, 22.5, 22.5, 21.4, 14.4 ppm.
HRMS (*m*/*z* -ESI⁺): Found: 358.3476 (M⁺) C₂₅H₄₄N⁺ Requires: 358.3468.
vₘₐₓ (neat)/cm⁻¹: 2955, 2923, 2854, 1494, 1453, 748, 724.

### Synthesis of Compound 40:

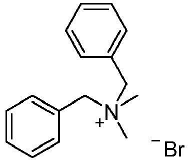

A 25 mL round-bottomed flask equipped with a stirring bar was charged with dimethylamine (5.0 mL, 2.0 M in THF, 5.0 mmol), acetonitrile (5 mL) and potassium carbonate (2.07 g, 15.0 mmol). Benzyl bromide (1.78 mL, 15.0 mmol) was added dropwise at room temperature. The reaction mixture was stirred for 24 h before the mixture was filtered. The solvent was removed under reduced pressure and the product was triturated in diethyl ether. The product was dried *in vacuo* yielding **40** as a white solid (1.45 g, 95%). M.p. 196-198 °C.
*δ*_{H} (400 MHz, DMSO-*d*₆): 7.66-7.48 (m, 10H), 4.62 (s, 4H), 2.87 (s, 6H) ppm.
*δ*_{C} (101 MHz, DMSO-*d*₆): 133.1, 130.2, 128.9, 128.1, 66.7, 48.0 ppm.
HRMS (m/z - ESI⁺): Found: 226.1594 (M⁺) C₁₆H₂₀N⁺ Requires: 226.1590.
vₘₐₓ (neat)/cm⁻¹: 3034, 2960, 2854, 2013, 1827, 1495, 847, 757, 731.

### Synthesis of Compound 41: dipropyldibenzyl ammonium bromide

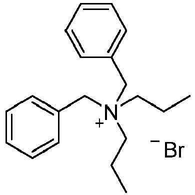

A 25 mL round-bottomed flask equipped with a stirring bar was charged with dipropylamine (0.69 mL, 5.0 mmol), acetonitrile (5 mL) and potassium carbonate (1.73 g, 12.5 mmol). Benzyl bromide (1.34 mL, 11.3 mmol) was added dropwise at room temperature. The reaction mixture was stirred for 48 h before the mixture was filtered. The solvent was removed under reduced pressure and the product was triturated in diethyl ether. The product was dried *in vacuo* yielding **41** as a white solid (1.31 g, 72%). M.p. 159-160 °C.
*δ*_{H} (400 MHz, DMSO-*d*₆): 7.65-7.48 (m, 10H), 4.64 (s, 4H), 3.15-3.03 (m, 4H), 1.89-1.74 (m, 4H), 0.84 (t, *J* = 7.1 Hz, 6H) ppm.
*δ*_{C} (101 MHz, DMSO-*d*₆): 132.8, 130.2, 129.0, 128.1, 62.8, 58.8, 15.8, 10.4 ppm.
HRMS (m/z - ESI⁺): Found: 282.2220 (M⁺) C₂₀H₂₈N⁺ Requires: 282.2216.
vₘₐₓ (neat)/cm⁻¹: 2988, 2962, 2876, 1473, 1460, 963, 743, 729, 702.

### Synthesis of Compound 42:

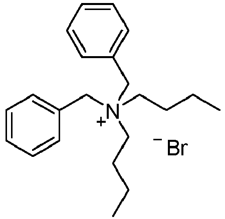

A 25 mL round-bottomed flask equipped with a stirring bar was charged with dibutylamine (0.84 mL, 5.0 mmol), acetonitrile (5 mL) and potassium carbonate (1.728 g, 12.5 mmol). Benzyl bromide (1.48 mL, 12.5 mmol) was added dropwise at room temperature. The reaction mixture was stirred for 48 h before the mixture was filtered. The solvent was removed under reduced pressure and the product was triturated in diethyl ether. The product was dried *in vacuo* yielding **42** as a white solid (1.72 g, 88%). M.p. 140-141 °C.
*δ*_{H} (400 MHz, DMSO-*d*₆): 7.64-7.47 (m, 10H), 4.60 (s, 4H), 3.16-3.05 (m, 4H), 1.86-1.72 (m, 4H), 1.34-1.18 (m, 4H), 0.90 (t, *J* = 7.4 Hz, 6H) ppm.
*δ*_{C} (101 MHz, DMSO-*d*₆): 132.9, 130.3, 129.1, 128.0, 62.8, 57.4, 23.9, 19.3, 13.5 ppm.
HRMS (m/z - ESI⁺): Found: 310.2529 (M⁺) C₂₂H₃₂N⁺ Requires: 310.2529.
vₘₐₓ (neat)/cm⁻¹: 2955, 2868, 1498, 1476, 872, 756, 725.

### Synthesis of Compound 43:

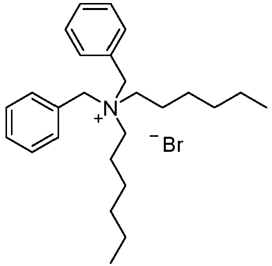

A 25 mL round-bottomed flask equipped with a stirring bar was charged with dihexylamine (0.93 mL, 7.1 mmol), acetonitrile (5 mL) and potassium carbonate (1.73 g, 12.5 mmol). Benzyl bromide (1.92 mL, 16.1 mmol) was added dropwise at room temperature. The reaction mixture was stirred for 48 h before the mixture was filtered. The solvent was removed under reduced pressure and the product was triturated in diethyl ether. The product was dried *in vacuo* yielding **43** as a white solid (1.52 g, 48%). M.p. 145-146 °C.
*δ*_{H} (400 MHz, DMSO-*d*₆): 7.63-7.47 (m, 10H), 4.62 (s, 4H), 3.19-3.02 (m, 4H), 1.87-1.70 (m, 4H), 1.39-1.15 (m, 12H), 0.87 (t, *J* = 6.6 Hz, 6H) ppm.
*δ*_{C} (101 MHz, DMSO-*d*₆): 132.8, 130.3, 129.0, 128.1, 62.9, 57.6, 30.6, 25.5, 22.0, 21.8, 13.7 ppm.
HRMS (*m*/*z* - ESI⁺): Found: 366.3162 (M⁺) C₂₆H₄₀N⁺ Requires: 366.3155.
vₘₐₓ (neat)/cm⁻¹: 2950, 2927, 2858, 1985, 1924, 1851, 1497, 1482, 756, 711.

### Synthesis of Compound 44:

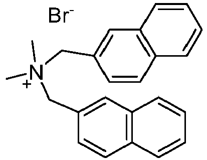

A 25 mL round-bottomed flask equipped with a stirring bar was charged with dimethylamine (2.53 mL, 2.0 M in THF, 5.1 mmol), acetonitrile (5 mL) and potassium carbonate (2.07 g, 15.0 mmol). 2-(bromomethyl)naphthalene (2.76 mL, 12.5 mmol) was added dropwise at room temperature. The reaction mixture was stirred for 24 h before the mixture was filtered. The solvent was removed under reduced pressure and the product was triturated in diethyl ether. The product was dried *in vacuo* yielding **44** as a white solid (0.166 g, 8%). M.p. 228-230 °C.
*δ*_{H} (400 MHz, DMSO-*d*₆): 8.21 (s, 2H), 8.1-7.94 (m, 6H), 7.70 (d, *J* = 8.2, 2H), 7.66-7.57 (m, 4H), 4.87 (s, 4H), 3.00 (s, 6H) ppm.
*δ*_{C} (101 MHz, DMSO-*d*₆): 133.4, 133.3, 132.5, 129.6, 128.4, 128.3, 127.6, 127.5, 126.8, 125.5, 67.2, 48.4 ppm.
HRMS (*m*/*z* - ESI⁺): Found: 326.1903 (M⁺) C₂₄H₂₄N⁺ Requires: 326.1903.
vₘₐₓ (neat)/cm⁻¹: 3030, 2961, 2868, 1487, 1474, 860, 819, 782.

### Synthesis of Compound 45:

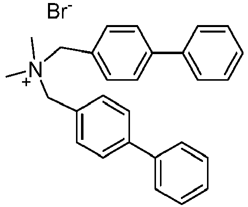

A 25 mL round-bottomed flask equipped with a stirring bar was charged with dimethylamine (0.67 mL, 2.0 M in THF, 1.4 mmol), acetonitrile (2 mL) and potassium carbonate (0.28 g, 2.0 mmol). 4-(bromomethyl)-1,1'-biphenyl (0.50 g, 2.0 mmol) was added dropwise at room temperature. The reaction mixture was stirred at reflux for 24 h before the mixture was filtered. The solvent was removed under reduced pressure and the product was triturated in diethyl ether. The product was dried *in vacuo* yielding **45** as a white solid (0.492 g, 80%). M.p. 230-232 °C.
*δ*_{H} (400 MHz, DMSO-*d*₆): 7.83 (d, *J* = 8.0 Hz, 4H), 7.79 - 7.69 (m, 8H), 7.49 (app. t, *J* = 7.5 Hz, 4H), 7.43-7.41 (t, *J* = 7.2 Hz, 2H), 4.83 (s, 4H), 2.99 (s, 6H) ppm.
*δ*_{C} (101 MHz, DMSO-*d*₆): 141.7, 139.0, 133.8, 129.0, 128.0, 127.2, 127.0, 126.8, 66.4, 48.1 ppm.
HRMS (m/z - ESI⁺): Found: 378.2220 (M⁺) C₂₈H₂₈N⁺ Requires: 378.2216.
vₘₐₓ (neat)/cm⁻¹: 3030, 2989, 2957, 1487, 1473, 853, 748.

### Synthesis of Compound 46:

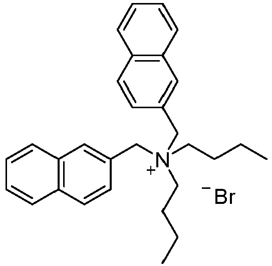

A 25 mL round-bottomed flask equipped with a stirring bar was charged with dibutylamine (0.84 mL, 5.0 mmol), acetonitrile (5 mL) and potassium carbonate (2.07 g, 15.0 mmol). (2-bromomethyl)naphthalene (2.76 g, 12.5 mmol) was added dropwise at room temperature. The reaction mixture was stirred for 48 h before the mixture was filtered. The solvent was removed under reduced pressure and the product was triturated in diethyl ether. The product was dried *in vacuo* yielding **46** as a white solid (0.26 g, 11%). M.p. 166-167 °C.
*δ*_{H} (400 MHz, DMSO-*d*₆): 8.22 (s, 2H), 8.07 (d, *J* = 8.6 Hz, 2H), 8.01 (t, *J* = 7.8 Hz, 4H), 7.71 (d, *J* = 8.6 Hz, 2H), 7.68-7.58 (m, 4H), 4.87 (s, 4H), 3.28-3.20 (m, 4H), 2.00-1.82 (m, 4H), 1.39-1.22 (m, 4H), 0.92 (t, *J* = 7.3 Hz, 6H) ppm.
*δ*_{C} (101 MHz, DMSO-*d*₆): 133.4, 133.3, 132.5, 129.4, 128.5, 128.3, 127.58, 127.57 126.9, 125.5, 62.9, 57.4, 24.0, 19.4, 13.4 ppm.
HRMS (m/z- ESI⁺): Found: 410.2848 (M⁺) C₃₀H₃₆N⁺ Requires: 410.2842.
vₘₐₓ (neat)/cm⁻¹: 3049, 2961, 2871, 2164, 1982, 1474, 1365, 762.

### Synthesis of Compound 47:

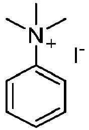

A 50 mL round-bottomed flask equipped with a stirring barwas charged with *N,N-*dimethyl-aniline (0.63 mL, 5.0 mmol) and CH₂Cl₂ (5 mL). lodomethane (0.31 mL, 5.0 mmol) was added dropwise at 0 °C. The reaction mixture was stirred at room temperature for 24 h. The solvent was removed under reduced pressure and the product was triturated in diethyl ether. The product was dried *in vacuo* yielding **47** as an off-white solid (0.47 g, 36%). M.p. 220-221 °C. (lit. M.p. 222-223)⁴.
*δ*_{H} (400 MHz, CDCl₃):7.87 (d, *J* = 8.3 Hz, 2H), 7.70-7.62 (m, 2H), 7.62-7.55 (m, 1H), 4.02 (s, 9H) ppm.
*δ*_{C} (101 MHz, CDCl₃): 147.3, 131.1, 131.0, 119.8, 57.9 ppm.
HRMS (m/z- ESI⁺): Found: 136.1120 (M⁺) C₉H₁₄N⁺ Requires: 136.1121.
vₘₐₓ (neat)/cm⁻¹: 3009, 1743, 1593, 1498, 1460, 939, 841, 765, 691.

### Synthesis of Compound 48:

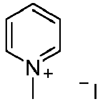

A 100mL round bottomed flask under argon atmosphere, equipped with a stirring bar, was charged with anhydrous pyridine (0.40 mL, 5.0 mmol) and acetonitrile (50 mL). Methyl iodide (0.31 mL, 5.0 mmol) was added dropwise and the mixture was refluxed for 18 h before being concentrated under reduced pressure. The resulting yellow solid was then dissolved in acetonitrile (7 mL) and was added to a stirring solution of diethyl ether (20 mL) before being filtered and washed with diethyl ether (3 x 10 mL) yielding **48** as a light-yellow solid (0.97 g, 88%). M.p. 79-80 °C dec.
*δ*_{H} (400 MHz, DMSO-*d*₆): 8.99 (d, *J* = 5.6 Hz, 2H), 8.58 (t, *J* = 7.8 Hz, 1H), 8.14 (app. t, 2H), 4.36 (s, 3H) ppm.
*δ*_{C} (101 MHz, DMSO-*d*₆): 145.5, 145.04, 127.7, 47.9 ppm.
HRMS (*m*/*z* - ESI⁺): Found: 94.0651 (M⁺) C₆H₈N⁺ Requires: 94.0651.
vₘₐₓ (neat)/cm⁻¹: 3033, 2989, 1629, 1497, 1482, 1284, 766, 673.

### Synthesis of Compound 49:

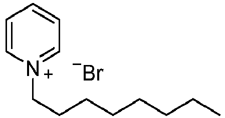

A 25 mL round bottomed flask under argon atmosphere, equipped with a stirring bar, was charged with anhydrous pyridine (1.05 mL, 13.0 mmol). 1-bromooctane (2.25 mL, 13.0 mmol) was added and the mixture was heated to 80 °C for 3 h. The mixture was concentrated under reduced pressure. The resulting yellow oil was triturated in diethyl ether (3 × 10 mL) yielding **49** as a light-yellow oil (1.23 g, 35%).
*δ*_{H} (600 MHz, DMSO-*d*₆): 9.12 (d, *J* = 5.3 Hz, 2H), 8.61 (t, *J* = 7.8 Hz, 1H), 8.14 (app. t, 2H), 4.60 (t, *J* = 7.2 Hz, 2H), 1.99-1.83 (m, 2H), 1.38-1.14 (m, 10H), 0.85 (t, *J* = 8.3 Hz, 3H) ppm.
*δ*_{C} (151 MHz, DMSO-*d*₆): 145.5, 144.7, 128.1, 60.7, 31.1, 30.7, 28.4, 28.3, 25.4, 22.0, 13.9 ppm.
HRMS (*m*/*z* - ESI⁺): Found: 192.1750 (M⁺) C₁₃H₂₂N⁺ Requires: 192.1747.
vₘₐₓ (neat)/cm⁻¹: 3028, 2955, 2925, 2855, 1633, 1486, 1170, 774, 683.

### Synthesis of Compound 52:

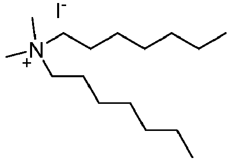

A 100 mL round-bottomed flask equipped with a stirring bar was charged with diheptylamine (1.00 g, 4.7 mmol), acetonitrile (15 mL) and potassium carbonate (3.89 g, 28.1 mmol). lodomethane (1.17 mL, 18.7 mmol) was added dropwise at 0 °C. The reaction mixture was stirred at room temperature for 30 min before the mixture was filtered. The solvent was removed under reduced pressure and the product was triturated in diethyl ether. The product was dried *in vacuo* yielding 52 as an off-white solid (1.46 g, 84%). M.p. 66-68 °C.
*δ*_{H} (400 MHz, DMSO-*d*₆): 3.24 - 3.20 (m, 4H), 2.98 (s, 6H), 1.68 - 1.55 (m, 4H), 1.36 - 1.16 (m, 16H), 0.85 (t, *J* = 6.5 Hz, 6H) ppm.
*δ*_{C} (101 MHz, DMSO-*d*₆): 62.9, 49.9, 30.9, 28.1, 25.7, 21.9, 21.7, 13.9 ppm.
HRMS (m/z - ESI⁺): Found: 242.2842 (M⁺) C₁₆H₃₆N⁺ Requires: 242.2842.
vₘₐₓ (neat)/cm⁻¹: 2924, 2856, 1467, 1378, 902, 724.

### Synthesis of Compound 53:

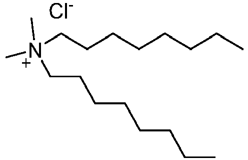

A 100 mL round-bottomed flask equipped with a stirring bar was charged with Dowex^{®} 1X8 CI (5.0 g) and methanol (30 mL). *N,N*-dimethyl-*N*-octyloctan-1-aminium bromide (**18**, 0.50 g, 1.43 mmol) was added and the mixture was shaken for 20 h on an orbital shaker. The mixture was passed through a plug of Dowex^{®} 1X8 CI (5.0 g) and the solvent was removed under reduced pressure. The product was triturated in diethyl ether and dried *in vacuo* yielding **53** as an off-white solid (0.41 g, 94%). M.p. 58-61 °C.
*δ*_{H} (400 MHz, DMSO-*d*₆): 3.31-3.21 (m, 4H), 3.02 (s, 6H), 1.71-1.56 (m, 4H), 1.38-1.16 (m, 20H), 0.86 (t, *J* = 6.5 Hz, 6H) ppm.
*δ*_{C} (101 MHz, DMSO-*d*₆): 62.7, 49.8, 31.1, 28.4, 28.4, 25.8, 22.0, 21.6, 13.9 ppm.
HRMS (*m*/*z* - ESI⁺): Found: 354.4098 (M⁺) C₂₄H₅₂N⁺ Requires: 354.4094.
vₘₐₓ (neat)/cm⁻¹: 2998, 2921, 2871, 2854, 1470, 897, 725.

The words "comprises/comprising" and the words "having/including" when used herein with reference to the present invention are used to specify the presence of stated features, integers, steps or components but do not preclude the presence or addition of one or more other features, integers, steps, components or groups thereof.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable subcombination.

### Embodiment

1. A method for hydrolysing polyethylene terephthalate comprising:
   combining polyethylene terephthalate), water, base, and a catalyst, and heating for a time sufficient to hydrolyse at least in part the polyethylene terephthalate),
   wherein the catalyst is a phase transfer catalyst having a formula selected from: 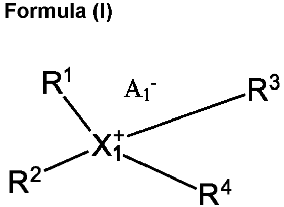
   wherein X₁ is N or P, wherein A₁⁻ is an anion,
   wherein each of R¹ and R² is independently selected from C₁-C₃ aliphatic,
   wherein each of R³ and R⁴ is independently selected from C₅-C₁₅ aliphatic, wherein together R¹, R², R³ and R⁴ comprise at least 14 carbon atoms; or 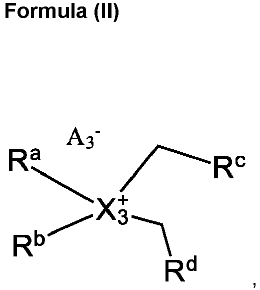
   wherein X₃ is N, and A₃⁻ is an anion,
   wherein R^{a} and R^{b} are each independently selected from C₂-C₈ aliphatic,
   wherein R^{c} is selected from C₁-C₈ aliphatic or C₆-C₂₀ aryl, and wherein R^{d} is C₆-C₂₀ aryl, or
   wherein R^{c} and R^{d} together form a ring structure having one or more C₅-C₁₀ aryl substituents, and wherein a catalyst of formula (II) comprises at least 18 carbon atoms.
2. The method of embodiment 1, wherein the catalyst is a phase transfer catalyst of formula (I).
3. The method of embodiment 1 or 2, wherein each of R¹ and R² are independently C₁-C₃ alkyl.
4. The method of any preceding embodiment, wherein each of R¹ and R² are C₁ alkyl, preferably methyl.
5. The method of any preceding embodiment, wherein each of R³ and R⁴ is independently selected from C₆-C₁₂ alkyl.
6. The method of any preceding embodiment, wherein R³ and R⁴ are the same.
7. The method of any preceding embodiment, wherein R³ and R⁴ are C₆ alkyl, C₇ alkyl or C₈ alkyl, optionally, wherein R³ and R⁴ are selected from hexyl, heptyl, or octyl.
8. The method of any preceding embodiment, wherein R¹ and R² are methyl.
9. The method of any preceding embodiment, wherein R³ and R⁴ are heptyl or octyl, preferably, wherein R³ and R⁴ are heptyl.
10. The method of embodiment 1, wherein R¹ and R² are methyl and R³ and R⁴ are heptyl or octyl.
11. The method of embodiment 1, wherein the phase transfer catalyst has formula (II).
12. The method of embodiment 11, wherein each of R^{a} and R^{b} is independently selected from C₂ to C₆ aliphatic, optionally, C₂ to C₆ alkyl.
13. The method of embodiment 12, wherein at least two of R^{a}, R^{b} and R^{c} are the same.
14. The method of any one of embodiments 11 to 13, wherein at least two of R^{a}, R^{b} and R^{c} are C₄-C₆ aliphatic, optionally, C₄-C₆ alkyl, optionally, butyl, pentyl or hexyl.
15. The method of any one of embodiments 11 to 14, wherein R^{d} is C₆-C₁₂ aryl.
16. The method of any one of embodiments 11 to 15, wherein R^{d} is selected from phenyl, biphenyl and naphthyl.
17. The method of any one of embodiments 11 to 16, wherein R^{a} and R^{b} are butyl, and wherein R^{d} is phenyl or biphenyl.
18. The method of embodiment 17, wherein R^{c} is butyl, optionally, wherein R^{c} is butyl and R^{d} is biphenyl. (compound 37)
19. The method of any one of embodiments 11 to 13 wherein R^{c} and R^{d} are each independently C₆-C₁₂ aryl, optionally, selected from phenyl, naphthyl or biphenyl.
20. The method of embodiment 19, wherein R^{a} and R^{b} are each independently C₄-C₆ alkyl, optionally, selected from butyl, pentyl or hexyl.
21. The method of embodiment 19 or 20, wherein R^{a} and R^{b} are each butyl or hexyl, and R^{c} and R^{d} are phenyl (compound 42 and 43) or R^{c} and R^{d} are each naphthyl (compound 45).
22. The method of any preceding embodiment wherein A⁻ is selected from Cl⁻, Br⁻, F⁻, BF⁴⁻, MsO⁻, TfO⁻, and CF₃C(O)O⁻, preferably A⁻ is Cl⁻ or Br⁻.
23. The method of any preceding embodiment, wherein the base is an alkali metal hydroxide or an alkaline earth metal hydroxide, suitably, wherein the base is selected from sodium hydroxide, potassium hydroxide, caesium hydroxide and magnesium hydroxide.
24. The method of any preceding embodiment, wherein the catalyst is employed in an amount of 10 mol% or less, preferably in an amount of 5 mol% or less, suitably, in an amount of 2.5 mol% or less, more suitably, in an amount of 1.5 mol% or less relative, most suitably in an amount of 1 mol% or less per mole of monomeric repeating unit of polyethylene terephthalate.
25. The method of any preceding embodiment, further comprising a subsequent addition of acid, suitably, a Bronsted acid.
26. The method of embodiment 25, wherein the acid is selected from HCl, HBr, H₂SO₄, HNO₃, CH₃COOH, suitably, the acid is an aqueous solution.
27. The method of any preceding embodiment, wherein the base is employed in a dry weight ratio of 2:1 or less per gram of polyethylene terephthalate, suitably, wherein the base is employed in a dry weight ratio of 1.5:1 or less per gram of polyethyelene terephthalate, more preferably wherein the base is employed in a weight ratio of 1:1 or less per gram of polyethylene terephthalate.
28. The method of any preceding embodiment, wherein the dry weight ratio of base to polyethylene terephthalate is in the range of from 0.5:1 to 2:1, preferably, in a range of from 0.7:1 to 1.3:1, such as from 0.8:1 to 1.2:1, for example from 0.9:1 to 1.1:1, optionally, in a weight ratio of 1:1.
29. The method of any preceding embodiment, wherein the step of combining polyethylene polyethylene terephthalate), water, base, and a catalyst, comprises combining polyethylene terephthalate with water in a concentration of 80 to 250 g/L, preferably in a concentration of 100 to 250 g/L, optionally in a concentration of 150 to 250 g/L.
30. The method of any preceding embodiment wherein the base is present in an amount of 10 molar equivalents or less relative to the number of moles of monomer unit of polyethylene terephthalate, suitably, in an amount of 5 molar equivalents or less relative to the number of moles of monomer unit of polyethylene terephthalate.
31. A method for hydrolysis of polyethylene terephthalate) comprising:
   combining polyethylene terephthalate), water, base, and a catalyst, and heating for a time sufficient to hydrolyze at least in part the polyethylene terephthalate),
   wherein the catalyst is a phase transfer catalyst selected from the following group: 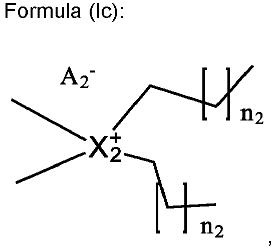
   wherein X₂ is N or P, and each n₂ is an integer independently selected from 4 to 10, and wherein A₂⁻ is an anion.
32. The method of embodiment 31, wherein X₂ is N.
33. The method of embodiment 31 or 32, wherein each n₂ may independently be 4, 5 or 6.
34. The method of embodiment 31 to 33, wherein A₂ is Br or Cl.
35. The method of embodiment 1, wherein the catalyst is selected from: 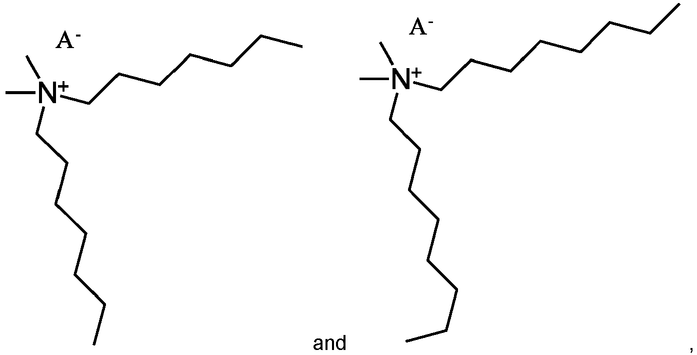 wherein A is Br or CI-.
36. The method of embodiment 1, wherein the catalyst is selected from: 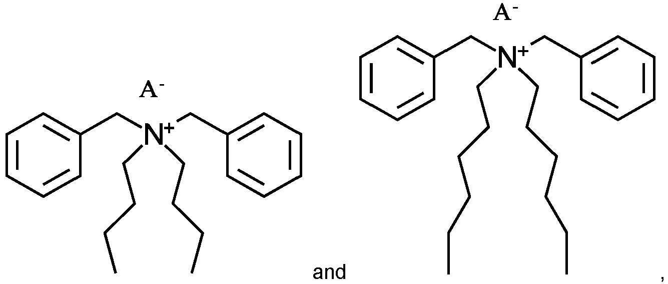 wherein A is Br or CI-.
37. The method of any preceding embodiment, wherein the hydrolysis reaction is carried out at a temperature in the range of from 50 to 150°C, optionally, from 60 to 120 °C, such as from 70 to 110°C, for example from 80 to 100°C.
38. The method of any preceding embodiment, wherein the reaction is carried out at a pressure in the range of from 1 atm to 5 atm, preferably, in a range of from 1atm to 2 atm, such as from 1 atm to 1.5 atm, for example at approximately 1 atm.
39. The method of any preceding embodiment, wherein the catalyst is employed in an amount of 5 mol% or less, suitably, in an amount of 2.5 mol% or less, more suitably, in an amount of 1.5 mol% or less, most suitably in an amount of 1 mol% or less per mole of monomeric repeating unit of polyethylene terephthalate; and wherein the dry weight ratio of base to polyethylene terephthalate is in the range of from 0.5:1 to 2:1, preferably, in a range of from 0.7:1 to 1.3:1, such as from 0.8:1 to 1.2:1, for example from 0.9:1 to 1.1:1, optionally, in a weight ratio of 1:1.
40..The method of embodiment 39, wherein the catalyst is employed in an amount of 2.5 mol% or less, more suitably, in an amount of 1.5 mol% or less per mole of monomeric repeating unit of polyethylene terephthalate; and wherein the dry weight ratio of base to polyethylene terephthalate is in a range of from 0.7:1 to 1.3:1, such as from 0.8:1 to 1.2:1, for example from 0.9:1 to 1.1:1, optionally, in a weight ratio of 1:1.
41. The method of embodiment 40, wherein the catalyst is employed in an amount of 1 mol% or less per mole of monomeric repeating unit of polyethylene terephthalate; and wherein the dry weight ratio of base to polyethylene terephthalate is in a range of from 0.8:1 to 1.2:1.
42. The method of any preceding embodiment, wherein the terephthalic acid formed from the hydrolysis reaction is further processed to form calcium terephthalate, optionally, wherein a metal-organic framework of calcium terephthalate is formed.
43. , A compound having the formula: 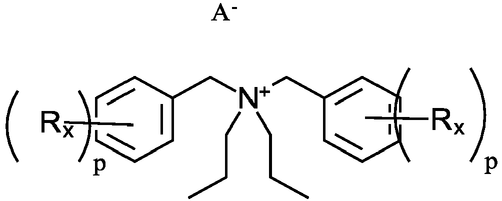
   wherein each p is an integer independently selected from 0 to 5,
   wherein each Rₓ is independently selected from C₁-C₁₂ aliphatic, optionally substituted with one or more selected from the group consisting of C₁-C₆ alkyoxy, C₁-C₆ thioalkyl, Br, Cl, I, and F.
44. The compound of embodiment 43, having the formula: 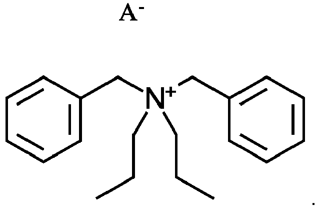
45. The compound of embodiment 43 or 44, wherein A⁻ is Br, Cl⁻ or I⁻.

## Claims

1. A method for hydrolysing polyethylene terephthalate comprising:
combining polyethylene terephthalate), water, base, and a catalyst, and heating for a time sufficient to hydrolyse at least in part the polyethylene terephthalate),
wherein the catalyst is a phase transfer catalyst having a formula selected from: 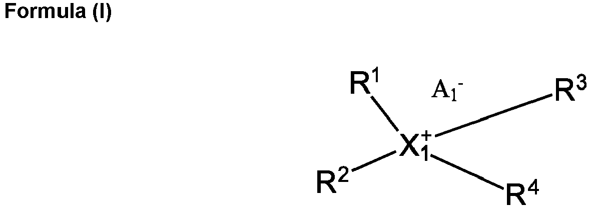
wherein X₁ is N or P, wherein A₁⁻ is an anion,
wherein each of R¹ and R² is independently selected from C₁-C₃ aliphatic,
wherein each of R³ and R⁴ is independently selected from C₅-C₁₅ aliphatic, wherein together R¹, R², R³ and R⁴ comprise at least 14 carbon atoms; The method of claim 1 or 2, wherein each of R¹ and R² are independently C₁-C₃ alkyl.

2. The method of claim 1, wherein each of R¹ and R² are C₁ alkyl, preferably methyl.

3. The method of any preceding claim, wherein each of R³ and R⁴ is independently selected from C₆-C₁₂ alkyl.

4. The method of any preceding claim, wherein R³ and R⁴ are the same.

5. The method of any preceding claim, wherein R³ and R⁴ are C₆ alkyl, C₇ alkyl or C₈ alkyl, optionally, wherein R³ and R⁴ are selected from hexyl, heptyl, or octyl.

6. The method of any preceding claim, wherein R¹ and R² are methyl.

7. The method of claim 1, wherein R¹ and R² are methyl and R³ and R⁴ are heptyl or octyl.

8. The method of any preceding claim wherein A⁻ is selected from Cl⁻, Br⁻, F⁻, BF⁴⁻, MsO⁻, TfO⁻, and CF₃C(O)O⁻, preferably A⁻ is Cl⁻ or Br⁻.

9. The method of any preceding claim, wherein the base is an alkali metal hydroxide or an alkaline earth metal hydroxide, suitably, wherein the base is selected from sodium hydroxide, potassium hydroxide, caesium hydroxide and magnesium hydroxide.

10. The method of any preceding claim, wherein the catalyst is employed in an amount of 5 mol% or less, suitably, in an amount of 2.5 mol% or less, more suitably, in an amount of 1.5 mol% or less relative, most suitably in an amount of 1 mol% or less per mole of monomeric repeating unit of polyethylene terephthalate.

11. The method of any preceding claim, further comprising a subsequent addition of acid, suitably, a Bronsted acid, optionally, wherein the acid is selected from HCl, HBr, H₂SO₄, HNO₃, CH₃COOH, suitably, the acid is an aqueous solution.

12. The method of any preceding claim, wherein the dry weight ratio of base to polyethylene terephthalate is in the range of from 0.5:1 to 2:1, preferably, in a range of from 0.7:1 to 1.3:1, such as from 0.8:1 to 1.2:1, for example from 0.9:1 to 1.1:1, optionally, in a weight ratio of 1:1.

13. The method of any preceding claim, wherein the step of combining polyethylene polyethylene terephthalate), water, base, and a catalyst, comprises combining polyethylene terephthalate with water in a concentration of 80 to 250 g/L, preferably in a concentration of 100 to 250 g/L, optionally in a concentration of 150 to 250 g/L.

14. The method of any preceding claim wherein the base is present in an amount of 10 molar equivalents or less relative to the number of moles of monomer unit of polyethylene terephthalate, suitably, in an amount of 5 molar equivalents or less relative to the number of moles of monomer unit of polyethylene terephthalate.

15. The method of any preceding claim, wherein the catalyst is selected from: 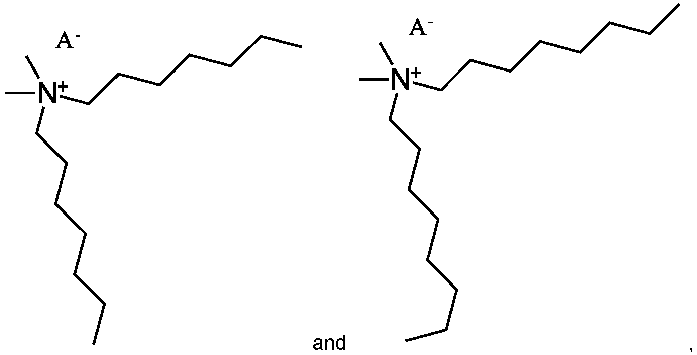 wherein A⁻ is Br⁻ or Cl⁻.
